Europäisches Patentamt

European Patent Office

Office européen des brevets

(19)

(11) EP 0 915 420 A2

(12) EUROPEAN PATENT APPLICATION

(43) Date of publication:
12.05.1999 Bulletin 1999/19

(51) Int. Cl.$^6$: G06F 11/10, G06F 11/14,
G06F 3/06

(21) Application number: 98303316.8

(22) Date of filing: 28.04.1998

(84) Designated Contracting States:
AT BE CH CY DE DK ES FI FR GB GR IE IT LI LU
MC NL PT SE
Designated Extension States:
AL LT LV MK RO SI

(30) Priority: 04.11.1997 JP 302231/97

(71) Applicant: FUJITSU LIMITED
Kawasaki-shi, Kanagawa 211-8588 (JP)

(72) Inventors:
• Taketa, Suijin
Nakahara-ku, Kawasaki-shi, Kanagawa 211 (JP)
• Tarouda, Yuuichi
Nakahara-ku, Kawasaki-shi, Kanagawa 211 (JP)
• Machida, Tatsuhiko
Nakahara-ku, Kawasaki-shi, Kanagawa 211 (JP)
• Iwatani, Sawao
Nakahara-ku, Kawasaki-shi, Kanagawa 211 (JP)

• Yorimitsu, Keiichi
Nakahara-ku, Kawasaki-shi, Kanagawa 211 (JP)
• Kamakura, Sanae
Nakahara-ku, Kawasaki-shi, Kanagawa 211 (JP)
• Yazawa, Satoshi,
Fujitsu Program Lab. Ltd.
Yokohama-shi, Kanagawa 222-0033 (JP)
• Kurihara, Takuya,
Fujitsu Program Lab. Ltd.
Yokohama-shi, Kanagawa 222-0033 (JP)
• Sugesawa, Yasuyoshi,
Fujitsu Program Lab. Ltd.
Yokohama-shi, Kanagawa 222-0033 (JP)

(74) Representative:
Stebbing, Timothy Charles et al
Haseltine Lake & Co.,
Imperial House,
15-19 Kingsway
London WC2B 6UD (GB)

(54) Disk array device

(57) When write processing once interrupted is restarted, if new data is stored in a nonvolatile memory 34 and regeneration of parity is impossible because data can not be read out normally from a third disk device (for instance 32-2) other than a disk device (for instance 32-1) in which new data is to be written and a disk device (for instance 32-5) for parity, a data writing unit 113 in a special write executing unit 110 overwrites the new data stored in the nonvolatile memory 34 at a specified write position of an appropriate disk device (for instance 32-1).

FIG.1

## Description

FIELD OF THE INVENTION

The present invention relates to a disk array device adapted to execution of data I/O processing by concurrently accessing a plurality units of disk device, and more specifically a disk array device adapted for maintenance of consistency of data by executing, when write processing is interrupted due to, for instance, power failure, recovery processing for data write using the data stored therein.

BACKGROUND OF THE INVENTION

A disk device having nonvolatability of record, a large capacity, a capability for high speed data transfer or other excellent features such as a magnetic disk or an optical disk device has been widely used as an external storage device for a computer system. Demands for a disk device include those for a capability for high speed data transfer, high reliability, a large capacity, and a low price. As a disk device satisfying the requirements as described above, now hot attentions are put gathered on a disk array device. The disk array device comprises a plurality of compact disk devices for recording therein data distributedly and also for enabling concurrent access to the data.

With the disk array device, by concurrently executing data transfer to a plurality of disk devices, data transfer can be executed at a rate higher by the number of disk devices as compared to a data transfer rate in a case of a single disk device. Further, by recording, in addition to data, redundant information such as parity data, it becomes possible to detect and correct a data error caused by, for instance, a failure of a disk device, and the reliability as high as that obtained in the method of recording duplicated contents of a disk device with a lower cost as compared to that requiring for duplicating.

It is generally recognized that a disk array device is a new recording medium simultaneously satisfying the three requirements for low price, high speed, and high reliability. For this reason, it is not allowable that any of the three requirements is not satisfied. What is most important and most difficult to maintain is high reliability. For, a signal disk itself constituting a disk array is a cheap one, and so high reliability is not required to a single disk itself. Accordingly, to realize a disk array device, it is most required to maintain the high reliability, and the present invention relates to a disk array device, so that the factor of high reliability is especially important.

David A. Patterson of Barkley school, California University, et al. have published reports in which disk array devices each for distributing a large volume of data to a number of disks at a high speed for realizing redundancy of data in preparation for a failure of any disk are classified to levels 1 to 5 (ACM SIGMOD Conference, Chicago, Illinois, June 1-3, 1988, p109 to p116).

The levels 1 to 5 used for classification of disk array devices proposed by David A. Patternson et al. is abbreviated as RAID (Redundant Arrays of Inexpensive Disks). Next brief description is made for RAID 1 to 5.

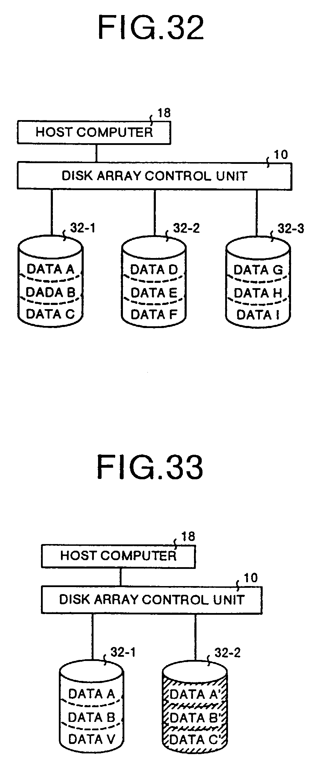

Fig. 32 shows a disk array device not having data redundancy, and this category is not included in the levels proposed by David A. Patterson et al., but this level is described herein as RAID0. In a RAID0 disk array device, as shown by data A to I, a disk array control unit 10 distributes data to disk devices 32-1 to 32-3 according to an I/O request from a host computer 18, and data redundancy for disk error is not insured.

A RAID1 disk array device has, as shown in Fig. 33, a mirror disk device 32-2 in which copies A' to C' of data A to C stored in the disk device 32-1 are stored. In a case of RAID1, use efficiency of the disk device is low, but data redundancy is insured, and can be realized with simple controls, so that this type of disk array device has widely been used.

A RAID2 disk array device stripes (divides) data by a unit of bit or byte, and concurrently executes data write or data read to and from each disk device. The striped data is recorded in the physically same sectors in all the disk devices. As error correction code, hamming code generated from data is used. The RAID2 disk array device has, in addition to disk devices for data storage, a disk device for recording the hamming code therein, and identifies a faulty disk from the hamming code to restore data. By having data redundancy based on hamming code, data can be insured even if a disk device goes wrong, but the use efficiency of disk devices is rather low, so that this type of disk array device has not been put into practical use.

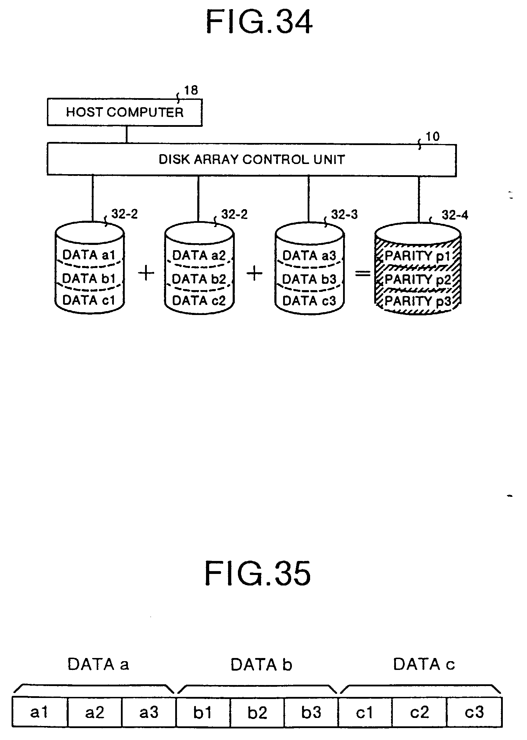

A RAID3 disk array device has the configuration as shown in Fig. 34. Namely, as shown in Fig. 35, for instance, data a, b, c are divided by a unit of bit or sector to data a1 to a3, b1 to b3, and c1 to c3, and further parity P1 is computed from the data a1 to a3, parity P2 is computed from the data b1 to b3, and also parity P3 is computed from data c1 to c3, and the disk devices 32-1 to 32-4 shown in Fig. 34 are concurrently accessed to write data therein.

In a case of RAID3, redundancy of data is maintained with parity. Further a time required for data write can be reduced by concurrently processing divided data. However, a concurrent seek operation is required for all the disk devices 32-1 to 32-4 for each access for data write or data read. This scheme is effective when a large volume of data is continuously treated, but in a case of, for instance, transaction processing for accessing a small volume of data at random, the capability for high-speed data transfer can not effectively be used, and the efficiency goes lower.

A RAID4 disk array device divides one piece of data by sector and then writes the divided data in the same disk device. For instance, in the disk device 32-1, data a is divided to sector data a1 to a4 and the divided data is written therein. The parity is stored in a disk device 32-4 univocally decided. Herein parity P1 is computed from data a1, b1, and c1, parity P2 from data a2, b2, c2, parity P3 from data a3, b3, c3, and parity P4 from data a4, b4, c4.

Data can concurrently be read from the disk devices 32-1 to 32-3. As for an operation for reading data a to b, in a case of the data a, sector data a1 to a4 are successively read out and synthesized by accessing sectors 0 to 3 of the disk device 32-1. When writing data, data prior to write processing and the parity are read and then new parity is computed to write the data, so that it is required to access the disk device 32-1 totally 4 times for one operation for writing data.

For instance, when sector data a1 in the disk device 32-1 is updated (rewritten), in addition to data write up updating, an operation for reading old data (a1) old at an updated position and old parity (P1) old of the corresponding disk device 32-4, computing new parity (P1) new consistent to new data (a1) new, and then writing the data is required.

Also when writing data, access to the disk device 32-4 for parity is always executed, so that data can not be written in a plurality of disk devices simultaneously. For instance, even if it is tried to simultaneously write data a1 in the disk device 32-1 and data b2 in the disk device 32-2, as it is required to read the parities P1, P2 from the same disk device 32-4 and then write the data after computing new parities, so that the data can not simultaneously be written in the disk devices.

RAID4 is defined as described above, but this type of disk array device provides few merits, so that there is no actual movement for introduction of this type of disk array device into practical use.

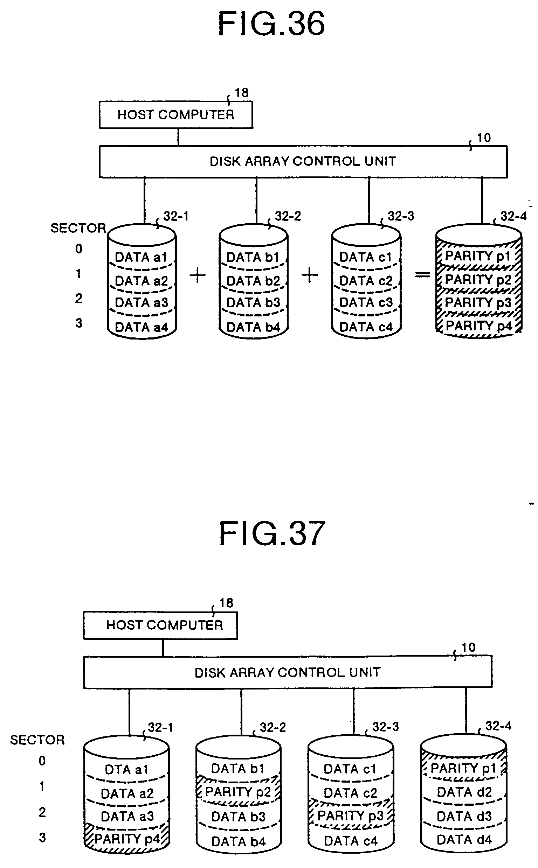

In a RAID5 disk array device, a disk device for parity is not fixed, so that operations for data read and data write can concurrently be executed. Namely, as shown in Fig. 37, parities for sectors are written in different disk devices respectively. Herein parity P1 is computed from data a1, b1, c1, parity P2 from data a2, b2, d2, parity P3 from data a3, c3, d3, and parity P4 from data b4, c4, d4.

As for concurrent operations for data read and data write, for instance, data a1 for sector 0 of the disk device 32-1 and data b2 for sector 1 of the disk device 32-2 are placed in the disk devices 32-4 and 32-3 having parity P1 and parity P2 different from each other respectively, so that the operations for reading data and writing data can concurrently be executed. It should be noted that overhead required for accessing 4 times in all is the same as that in RAID4.

As described above, in a case of RAID5, operations for data read and data write can concurrently be executed by accessing a plurality of disk devices asynchronously, so that this type of disk array device is suited to transaction processing executed by accessing a small volume of data at random.

In the conventional types of disk array devices as described above, when power supply is interrupted for some reasons while data write to a disk device is being executed, the system control can be started from the same operation for writing data after recovery of power supply in RAID1 to RAID3 disk array devices, but the same write operation can not be restarted after recovery of power supply in RAID4 and RAID5 disk array devices for the following reasons.

When writing data in a RAID4 or a RAID 5 disk array device, a parity is decided by computing exclusive-OR (expressed by the exclusive-OR symbol) for data in a plurality of disk devices through the equation (1) below and the parity is stored in a disk device for parity.

$$\text{Data a } (+) \text{ data b } (+) \cdot \cdot \cdot = \text{Parity P} \qquad (1)$$

Sites for storage of data and parity are fixed, in a case of RAID4, to particular disks 32-1 to 32-4 as shown in Fig. 36. In contrast, in a case of RAID5, sites for storage of parity are distributed to the disk devices 32-1 to 32-4 as shown in Fig. 37 to dissolve concentration of access to a particular disk or particular disks due to operations for reading and writing parity.

When reading data from these RAID4 and RAID5 types of disk array devices, data in the disk devices 32-1 to 32-4 cannot be rewritten, so that consistency of parity is maintained, but also parity must be rewritten according to data when writing data therein.

For instance, when old data (a1) old in the disk device 32-1 is rewritten to new data (a1) new, parity P1 for all the data in the disk device can be maintained by updating parity by computing through the equation (2):

$$\text{Old data } (+) \text{ old parity } (+) \text{ new data} = \text{New parity } (2)$$

As shown by this equation (2), it is necessary to read out old data and old parity in the disk device first, and then an operation for writing new data and operations for generating and writing new parity are executed.

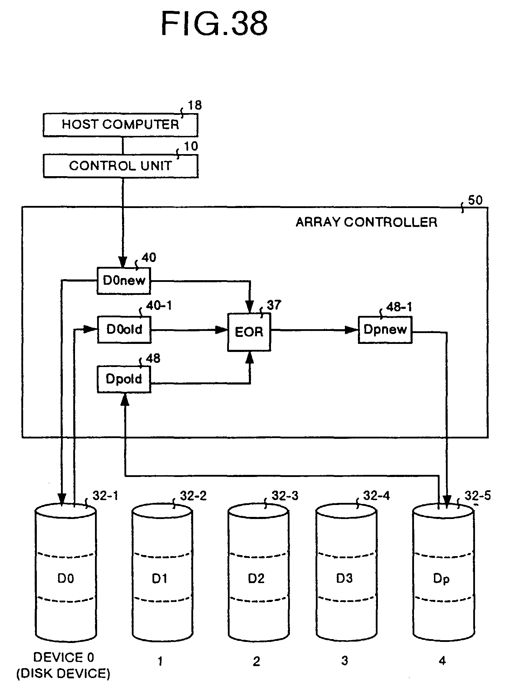

Next detailed description is made for a method of rewriting data in a RAID5 type of disk array device with reference to Fig. 38. Fig. 38 is a simulated view for illustrating a sequence for rewriting data, and in this figure, an array controller 50 is connected to 5 units of disk devices (Devices 0, 1, 2, 3, 4) 32-1, 32-2, 32-3, 32-4, and 32-5 for the purpose to control the disk devices 32-1 to 32-5, and a host computer 18 is connected to the array controller 50 via a control unit 10 for controlling the array controller 50.

For instance, when rewriting data (D0) in the disk device 32-1, at first the control unit 10 issues a write command to the array controller 50, and also transfers write data (D0 new) 40 to the array controller 50. The array controller 50 receives the write command from the control unit 10, and reads out old data (D0 old) 40-1 from the disk controller 32-1. Also the array controller 50 reads out old parity (Dp old) from the disk device 32-5.

Then the array controller 50 writes the new data (D0 new) in the disk device 32-1. Then the array controller 50 computes exclusive-OR (EOR) with a logic circuit 12 among old parity (DP old) 48, old data (D0 old) 40-1, and new data (D0 new) 40 to generate new parity (Dp new) 48-1, and write the new parity in the disk device 32-5. Then the array controller 50 reports to the control unit 10 that the write operation has been finished normally, and the control unit 10 acknowledges the report, thus data updating being finished.

If power is cut off while writing new data or new parity in a RAID4 or a RAID5 type of disk array device, it becomes impossible to check up to where data has been written normally, and consistency of parity is lost. If the processing for writing the same data is executed after recovery of power, old data and old parity are read from a disk device or disk devices with consistency of parity having been lost therefrom, so that inconsistent parity is generated and the data write operation is disadvantageously finished.

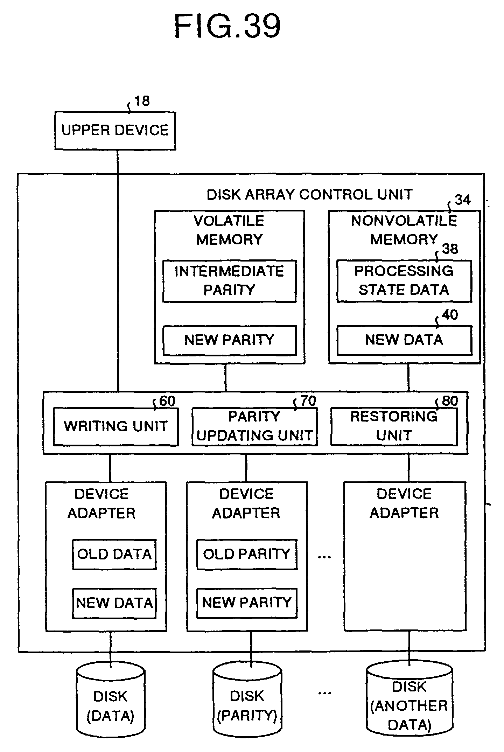

To solve the problem described above, the present inventors proposed RAID4 and RAID5 types of disk array device in which, even if power is cut off during an operation for writing new data or new parity, the interrupted operation for writing the same data or same parity can be restarted (Refer to Japanese Patent Laid-Open Publication No. HEI 6-119126). The disk array device according to this invention is shown in Fig. 39.

In this disk array device, at least processing state data 38 indicating a processing state of a writing unit 60 as well as of a parity updating unit 70 and new data 40 transferred from an upper device 18 are stored in an nonvolatile memory 34 in preparation for a case where power goes down, and when power is turned ON, a restoring unit 80 executes the processing for recovery using the new data 40 maintained in the nonvolatile memory 34 with reference to the processing state data 38 in the nonvolatile memory 34 when the write processing has been interrupted.

However, out subsequent study showed that, in the invention disclosed in Japanese Patent Laid-Open Publication No. HEI 6-119126, if any one of a plurality of disk devices goes wrong, sometimes the processing for recovery can not be executed. Namely, in the configuration shown in Fig. 38, for instance, if the disk device 32-2 is faulty, when power is cut off and the operation for writing data is interrupted while rewriting new data (D0 new) or new parity (Dp new), not only data (D0) in the disk device 32-1 and parity (Dp) in the disk device 32-5 are broken, but also it becomes impossible to reconstruct data (D1) during data stripe and constituting the same parity group in the faulty disk device 32-2, thus the data being lost.

Also it is conceivable that the invention disclosed in Japanese Patent Laid-Open Publication No. HEI 6-119126 is applied to a RAID5 disk array device having a plurality of array controllers. Namely, an nonvolatile memory is provided in a disk array device having a plurality of array controller, new data and processing state data are stored in the nonvolatile memory, and the processing for data recovery is executed, when the data write processing is not finished normally due to power failure or for any other reason, using the data.

However, when a plurality of array controllers are booted up with independent power supply units respectively, time delay is generated. For this reason, if power supply is restarted after processing for writing data has not been normally finished in a plurality of array controllers, the processing for recovery is executed to data in a parity group updated immediately after data recovery by an array controller using data stored in an nonvolatile memory in another array controller, and the last data is disadvantageously lost.

SUMMARY OF THE INVENTION

It is an object of the present invention to provide a disk array device which can restart, even if power goes down during data write processing, the interrupted data write processing after recovery of power to complete the processing, especially a disk array device in which data can be restored even if any of a plurality of disk devices is faulty, or a disk array device having a plurality of array controllers in which data can be restored.

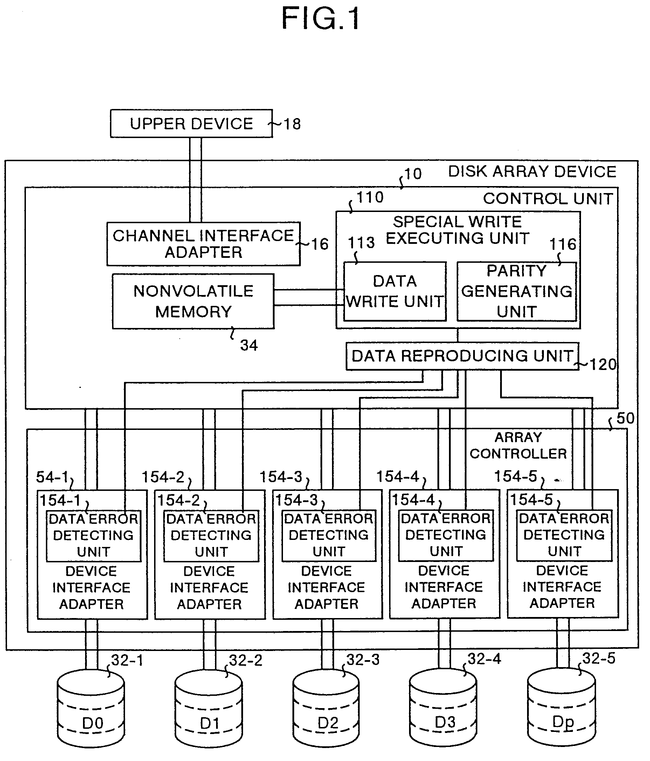

Fig. 1 is an explanatory view showing an operational principle of a disk array device according to the present invention. As shown in Fig. 1, the disk array device belongs to the category of RAID4 or RAID5, and comprises a control unit 10, an array controller 50, and a plurality unit (for instance, 5 units in Fig. 1) of disk devices 32-1, 32-2, 32-3, 32-4, and 32-5.

Provided in the control unit 10 are a channel interface adapter 16, an nonvolatile memory 34, a special write executing unit 110, and a data reproducing means 120. An upper device 18 such as a host computer is connected via the channel interface adapter 16 to the disk array device. The nonvolatile memory 34 stores therein new data transferred from the upper device.

When the write processing is interrupted once and then restarted, if regeneration of parity is impossible because new data is stored in the nonvolatile memory 34 and data can not is read out normally from a third disk device (for instance, 32-2) excluding a disk device (for instance, 32-1), to which it has been instructed for new data to be written in, and a disk device for parity (for instance, 32-5), the special write executing unit 110 executes the processing for restoring data by generating new parity using new data stored in the nonvolatile memory 34, and writes the new data, new parity and other data in the disk device by means of special write processing.

Namely, the special write executing unit 110 has a data write unit 113 and a parity generating unit 116, and the data write unit 113 overwrites a preset special value or preferably new data stored in the nonvolatile memory 34, when executing the special write processing, at a specified write position in the specified disk device (for instance, 32-1).

Also when executing the special write processing, the parity generating unit 116 generates new parity using data and parity stored at positions corresponding to disk write positions for new data in a disk device (for instance, 32-1), to which it has been instructed for new data to be written in, and a disk device for parity (for instance, 32-5) and also using new data stored in the nonvolatile memory 34, and writes the new parity in the disk device for parity (for instance, 32-5).

The data reproducing unit 120 issues a request for shift to the special write processing mode to the special write executing unit 110 when there is a third disk device (for instance, 32-2) from which data can not be read out normally in processing for recovery).

Provided in the array controller 50 are a plurality (for instance, 5 units in Fig. 1) of device interface adapters 54-1, 54-2, 54-3, 54-4, and 54-5. Data error detecting units 154-1, 154-2, 154-3, 154-4, 154-5 are provided in the device interface adapters 54-1, 54-2, 54-3, 54-4, and 54-5, respectively. The data error detecting units 154-1, 154-2, 154-3, 154-4, 154-5 detects generation of an error when reading out data from the disk devices 32-1, 32-2, 32-3, 32-4, and 32-5, and reports generation of the error to the data reproducing unit 120.

In a disk array device having the configuration described above, the processing for data recovery is executed as described below. After processing for writing new data is interrupted due to power failure or for other reasons, when the write processing is restarted because power supply is restarted or for other reasons, at first parity stored at a position corresponding to a disk write position for new data in a disk device for parity (for instance, 32-5) is read out. In this step, a read error is detected by the data error detecting unit (for instance, 154-5) because consistency of parity with that of data has been lost due to interruption of the previous write processing.

Then the data error detecting unit (for instance, 154-5) reports generation of an error to the data reproducing unit 120. When the data reproducing unit 120 receives the report, it reads out data, for reproducing the parity data, from disk devices (for instance, 32-2, 32-3, 32-4) other than a disk device as a target for new data write (for instance, 32-1) and a disk device for parity (for instance, 32-5) each belonging to the parity group in which the read error was generated.

In this step, if a further read error is detected by the data error detecting unit (for instance, 154-2) while reading out data from a third disk device (for instance, 32-2), the data error detecting unit reports generation of the error to the data reproducing unit 120. With this operation, the data reproducing unit 120 issues a request for shift to the special write processing mode to the special write executing unit 110.

When the special write executing unit 110 receives a request for shift to the special write processing mode, the data write unit 113 overwrites a preset special value or preferably new data stored in the nonvolatile memory 34 at specified write positions in the specified disk device (for instance, 32-1).

The parity generating unit 116 generates new parity using data and parity stored at positions corresponding to specified write positions in a disk device (for instance, 32-1), to which it has been instructed for new data to be written in, as well as in a disk device for parity (for instance, 32-5), and writes the new parity in the disk device for parity (for instance, 32-5). Then the special write processing mode is terminated.

It should be noted that, when a preset special value is overwritten at a specified write position in a specified disk device (for instance, 32-1) (for instance, when new data is not stored in the nonvolatile memory 34), the data write unit 113 memorizes that the special value was overwritten, for instance, by providing a flag in the memory, and simulatedly reports a read error when a read request is issued to the data.

As described above, a disk array device according to the present invention is a disk array device adapted to data updating by reading out old data stored at a write position of a specified disk device, then writing new data transferred from a upper device at the write position, and writing a new parity generated according to an old parity stored at a disk write position for the new data on a disk device for parity, the old data as well as to the new data at a disk storage position for the old parity, comprising an nonvolatile memory for storing therein new data transferred from a upper device; and a special write executing unit for executing processing for recovery, in a case where, when write processing is interrupted once and then the interrupted write processing is restarted, it is impossible to restore a parity because required data can not normally be read out from a third disk device other than a first disk device in which the new data is stored in the nonvolatile memory thereof and also in which new data is to be written and a second disk for parity, by generating a new parity by means of using data and parity stored at a position corresponding to a disk write position for the new data on the first disk device and the second disk device and new data stored in the nonvolatile memory.

With the disk array device according to the present invention, when write processing interrupted once due to power failure or for other reason is restarted, processing for recovery of data is executed, even when there is any faulty disk, by generating new parity (Dp new) using data (D0 old, Dp old) stored at positions corresponding to disk write positions for new data (D0 new) in the disk device, to which it has been instructed for new data (D0 new) to be written in as well as in the disk device for parity and new data (D0 new) stored in the nonvolatile memory.

A disk array device according to the present invention characterized in that the data stored at positions corresponding to disk write positions for the new data on all disk devices other than the first disk device, second disk device, and third disk device, and the generated new parity are stored in the nonvolatile memory, and the special write executing unit concurrently writes the new data stored in the nonvolatile memory, the data stored at corresponding positions of all disk devices excluding the first disk device, second disk device, and third disk device, and the generated new parity in corresponding disks.

With the disk array device according to the present invention, when restarting the write processing once interrupted, new data (D0 new), other data (D2, D3), and new parity (Dp new) are concurrently written into corresponding disk devices, so that the processing for recovery of data can be executed even if there is any faulty disk.

A disk array device according to the present invention is characterized in that, a write flag indicating that write processing is being executed and management information indicating progression of the write processing are stored in the nonvolatile memory in a period of time from a time when a write processing instruction is received from an upper device until the write operation is finished in the normal state.

With the disk array device according to the present invention, as a write flag indicating whether an operation for writing data into a disk device has been finished normally or not and a status indicating a stage of the write processing are stored in an nonvolatile memory, if the write processing has not been finished normally, when power supply is restarted, whether any data not having been written in the normal state is remaining or not can visually and easily be checked by referring to the write flag, and also the recovery processing can be restarted from the point where the write processing was interrupted by referring to the status, so that the recovery processing can rapidly be executed.

A disk array device according to the present invention is a disk array device comprising a plurality of array controllers each driven by an independent power supply unit for writing and reading data and parity to and from a plurality of disk device, and a control unit for controlling the array controller, and executing data updating by reading out old data stored at a write position on a specified disk device, then writing new data transferred from an upper device at the write position, and further writing a new parity generated according to an old parity, old data, and new data read from storage positions corresponding to disk write positions for the new data in a disk device for parity at disk storage positions for the old parity; wherein the control unit comprises a nonvolatile memory for storing therein at least the new data, old data, and old parity, when write processing is instructed from an upper device, before the write processing is executed to a disk device; a task generating unit for generating, when it is reported that an array controller, to which power supply has been stopped, is included in the plurality of array controllers, a task for allocating the write processing being executed by the array controller with power supply having been stopped thereto or write processing to be executed by the array controller but not having been completed to other array controllers; and a task information table for storing therein the task generated by the task generating unit; and further the plurality of array controllers each comprise a power monitoring unit for mutually monitoring the power supply state; a power supply stop reporting unit for reporting to the control unit the fact that stoppage of power supply to other array controller or controllers has been detected; and a parity generating unit for generating a new parity according to data read from a storage position corresponding to a disk write position for the new data on all disks excluding the disk device in which it has been specified to write new data and the disk device for parity as well as to new data transferred from the nonvolatile memory.

With the disk array device according to the present invention, when a write instruction is issued from an upper device, new data (D0 new), old data (D0 old), and old parity (Dp old) are stored in a non volatile memory prior to execution of the write processing to a disk device, so that, when a trouble is generated in the write processing by one of array controllers, another array controller can continue the write processing instead of the faulty array controller, and for this reason consistency of data is maintained.

A disk array device according to the present invention is characterized in that, management information indicating progression of write processing is stored in the nonvolatile memory, and the task generating unit generates a task according to the management information stored in the nonvolatile memory.

With the disk array device according to the present invention, a status indicating a stage of the write processing and an ID flag indicating an array controller having executed the process indicated by the status are stored in a nonvolatile memory, and a task for alternative processing is generated according to the status, so that the write processing can be restarted from the interrupted point.

A disk array device according to the present invention is a disk array device comprising a plurality of array controllers each driven by an independent power supply unit for writing and read data and parity to and from a plurality of disk device, and a control unit for controlling the array controller, and executing data updating by reading out old data stored at a write position on a specified disk device, then writing new data transferred from an upper device at the write position, and further writing a new parity generated according to an old parity, old data, and new data read from storage positions corresponding to disk write positions for the new data in a disk device for parity at disk storage positions for the old parity; wherein each of the plurality of array controllers comprises a nonvolatile memory for storing, when write processing is instructed from an upper device, and before the write processing to a disk device is executed, at least the new data, old data, and old parity therein; and a communicating unit for executing transaction of data and parity with another array controller, transmitting, when the new data, old data, and old parity have been stored in the nonvolatile memory in one of the array controllers, the new data, old data, and old parity stored in the nonvolatile memory from the one array controller to the other array controller before write processing is executing to a disk device, and also receiving the new data, old data, and old parity sent from the one array controller to the other array controller and storing them in the nonvolatile memory of the other array controller.

With the disk array device according to the present invention, when an instruction for write processing is issued from an upper device, new data (D0 new), old data (D0 old), new parity (Dp old) or new parity (Dp new) are stored in the nonvolatile memory of one of the array controllers before execution of the write processing to a disk device, and further new data (D0 new), old data (D0 old), and old parity (Dp old) are copied into a nonvolatile memory of another array controller, so that, even if the processing for writing data and parity is not finished in the normal status due to power failure or for some other reasons, when power supply is restarted, the recovery processing can easily be executed by using new data (D0 new) stored in a nonvolatile memory in one of the array controllers or in the other one.

A disk array device according to the present invention is characterized in that, management information indicating progression of write processing is stored in the nonvolatile memory.

With the disk array device according to the present invention, a status indicating a stage of write processing is stored in the nonvolatile, so that, after the write processing is not finished in the normal state, when power supply is restarted, the write processing can be restarted from the interrupted point by referring to the status.

A disk array device according to the present invention is characterized in that, when write processing is interrupted in the one of the array controllers and then the array controller interrupted as described above is restored to a stable allowing the normal operation, the one of the array controllers, or the other array controller having received the new data, old data, and old parity from the one of the array controller before interruption of the write processing executes the interrupted write processing again according to the new data, old data, and old parity stored in a respective nonvolatile memory.

With the disk array device according to the present invention, write processing once interrupted is restarted according to new data (D0 new), old data (D0 old), and old parity (Dp old) stored in a nonvolatile memory, so that the recovery processing can easily be executed.

A disk array device according to the present invention is a disk array device comprising a plurality units of disk devices, and an array controller for writing and reading data and parity to and from the disk devices and adapted for data updating by reading old data stored at a write position of a specified disk device and then writing new data transferred from an upper device at the write position, and also writing a new parity generated according to an old parity, old data, and new data read from a storage position corresponding to a disk write position for the new data on a disk device for parity at a disk storage position for the old parity; characterized in that the disk array device further comprises a non-failure power supply unit for baking up power supply to the plurality units of disk device as well as power supply to the array controller.

With the disk array device according to the present invention, even when AC input to a power supply unit is stopped, or when power supply between a power supply unit and an array controller or that between a power supply unit and a disk device is down for some reasons or other, power supply is executed continuously, so that the write processing by an array controller is not interrupted with consistency of data maintained.

A disk array device according to the present invention is a disk array device adapted for data updating by reading out old data stored at a write position of a specified disk device and then new data transferred from an upper device at the write position, and also writing a new parity generated according to an old parity, old data, and new data stored at a write position corresponding to the disk write position for the new data on a disk device for parity at the disk storage position for the old parity; and the disk array device further comprises a special write executing unit for executing processing recovery, when, of a data group as a basis for a parity, data in at least two disk units can not be read out normally, by writing arbitrary data in the two disk devices from which data can not be read out normally and generating a new parity using the data arbitrarily written and data normally read out from the data group as a basis for a parity; and a data error detecting unit for issuing a data check response to read to the data arbitrarily written by the special write executing unit.

With the disk array device according to the present invention, although data written in a disk device, from which data can normally be read out, can not be reproduced, by generating new parity by means of writing arbitrary data in the disk device, the disk device can normally be operated according to a write instruction from an upper device. For this reason, the recovery processing from an upper device can be executed.

Also with the disk array device according to the present invention, by memorizing that arbitrary data has been written at a place where unreadable data is stored in a disk device from which data can not normally be read out, and also by sending an error or the like in response to a read instruction from an upper device for the written arbitrary data, it is possible to prevent the arbitrary data from erroneously be sent to the upper device.

Other objects and features of this invention will become understood from the following description with reference to the accompanying drawings.

BRIEF DESCRIPTION OF THE DRAWINGS

Fig. 1 is an explanatory view for illustrating principles of a disk array device according to the present invention;

Fig. 2 is a block diagram showing Embodiment 1 of the disk array device according to the present invention;

Fig. 3 is a functional block diagram showing a case where one of the disk devices in Embodiment 1 of the disk array device according to the present invention is faulty;

Fig. 4 is a functional block diagram showing a case where no disk device in Embodiment 1 of the disk array device according to the present invention is faulty;

Fig. 5 is a simulated view showing an example of contents stored in a management table stored in a nonvolatile memory in Embodiment 1;

Fig. 6 is a flow chart showing a general flow of operations in Embodiment 1 of the disk array device according to the present invention;

Fig. 7 is a flow chart showing details of the processing for writing data as well as for updating parity in Embodiment 1 of the disk array device according to the present invention;

Fig. 8 is a flow chart showing details of special data write processing in Embodiment 1 of the disk array device according to the present invention;

Fig. 9 is a flow chart showing details of ordinary data write processing in Embodiment 1 of the disk array device according to the present invention;

Fig. 10 is a flow chart showing details of recovery processing in Embodiment 1 of the present invention;

Fig. 11 is a flow chart showing details of recovery processing in NFT in Embodiment 1 of the disk array device according to the present invention;

Fig. 12 is a flow chart sowing details of recovery processing in FT in Embodiment 1 of the disk array device according to the present invention;

Fig. 13 is a flow chart showing details f the data read-out processing in Embodiment 1 of the disk array device according to the present invention;

Fig. 14 is a block diagram showing Embodiment 2 of the disk array device according to the present invention;

Fig. 15 is a functional block diagram showing a case where one of disk devices in Embodiment 2 of the disk array device according to the present invention;

Fig. 16 is a functional block diagram showing a case where there is no faulty disk device in Embodiment 2 of the disk array device according to the present invention;

Fig. 17 is a block diagram showing Embodiment 3 of the disk array device according to the present invention;

Fig. 18 is a functional block diagram showing Embodiment 3 of the disk array device according to the present invention;

Fig. 19 is a flow chart showing details of write processing in Embodiment 3 of the disk array device according to the present invention;

Fig. 20 is a flow chart showing details of the processing in response to a write instruction to other disk device issued before generation of abnormality to an array controller in which abnormality has been generated in Embodiment 3 of the disk array device according to the present invention;

Fig. 21 is a functional block diagram showing Embodiment 4 of the disk array device according to the present invention;

Fig. 22 is a simulated view showing a case in which a management table, new data, and new parity are stored in a nonvolatile memory in Embodiment 4;

Fig. 23 is a simulated view showing a case in which a management table, new data, and intermediate parity are stored in a nonvolatile memory in Embodiment 4;

Fig. 24 is a flow chart showing details of write processing in Embodiment 4 of the disk array device according to the present invention;

Fig. 25 is a flow chart showing details of recovery processing in Embodiment 4 of the disk array device according to the present invention;

Fig. 26 is a functional block diagram showing Embodiment 5 of the disk array device according to the present invention;

Fig. 27 is a simulated view showing an example of contents of a management table stored in a nonvolatile memory in Embodiment 2;

Fig. 28 is a flow chart showing details of write processing in Embodiment 5 of the disk array device according to the present invention;

Fig. 29 is a functional block diagram showing a variant of Embodiment 5 of the disk array device according to the present invention;

Fig. 30 is a flow chart showing details of write processing in the variant;

Fig. 31 is a functional block diagram showing Embodiment 6 of the disk array device according to the present invention;

Fig. 32 is an explanatory view showing a disk array device according to RAID0;

Fig. 33 is an explanatory view showing a disk array device according to RAID1;

Fig. 34 is an explanatory view showing the disk array device according to RAID3;

Fig. 35 is an explanatory view showing data division according to RAID3;

Fig. 36 is an explanatory view showing a disk array device according to RAID4;

Fig. 37 is an explanatory view showing the disk array device according to RAID5;

Fig. 38 is an explanatory view showing a sequence for rewriting data according to RAID5; and

Fig. 39 is a functional block diagram of a disk array device according to a previous invention applied by the present inventors.

DESCRIPTION OF THE PREFERRED EMBODIMENT

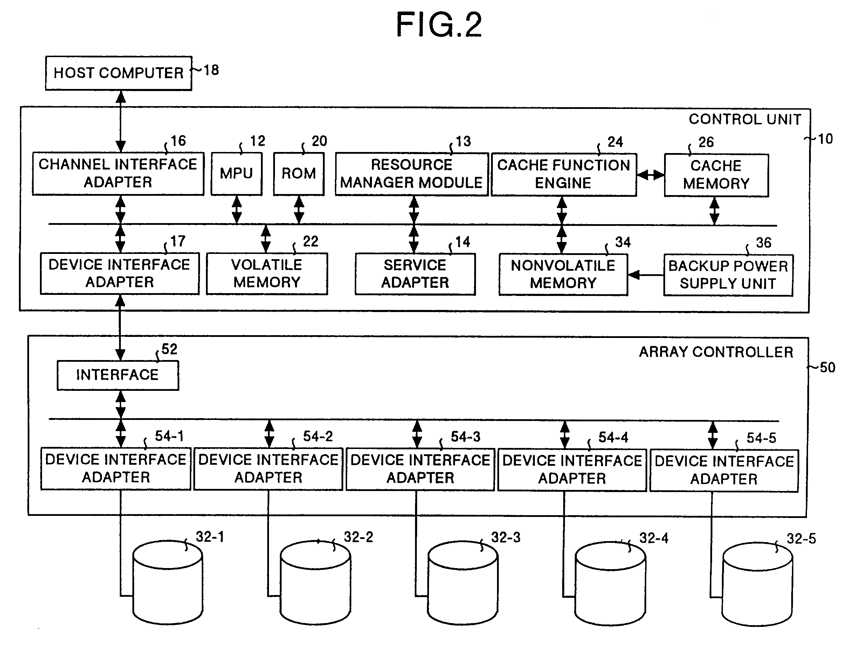

Next detailed description is made for embodiments of the disk array device according to the present invention with reference to Fig. 2 to Fig. 31.

Fig. 2 is a block diagram showing Embodiment 1 of a disk array device according to the present invention. In Fig. 2, provided in a control unit 10 is a microprocessor (described as MPU hereinafter) 12. Connected to an internal bus of this MPU 12 are a ROM 20 in which control program or specified data is stored, a volatile memory 22 using a RAM, a cache memory 26 provided via a cache function engine 24, a nonvolatile memory 34 operable even during power failure because of a backup power supply unit 36, a resource manager module 13 managing internal resources or internal jobs, and an service adapter 14 for managing the hardware environment.

Also a channel interface adapter 16 is provided in the control unit 10, and a host computer 18 functioning as an upper device is connected via the adapter 16 to the control unit 10. Further, a device interface adapter 17 is provided in the control unit 10, and an array controller 50 controlling a plurality units (for instance, 5 units in Fig. 2) of disk devices 32-1, 32-2, 32-3, 32-4, and 32-5 is connected via the adapter 17 to the control unit 10.

Provided in the array controller 50 are an upper interface 52 connected to the device interface adapter 17 in the control unit 10, and a plurality units (for instance,5 units in Fig. 2) of device interface adapters 54-1, 54-2, 54-3, 54-4, and 54-5 as functioning as lower interfaces with a plurality units of disk devices 32-1 to 32-5 connected thereto.

Of the 5 units of disk devices 32-1 to 32-5, for instance, 4 units of the disk devices are used for storage of data, and one unit of the devices is used for parity. In the disk array device according to the present invention, the same function as that in the RAID4 type of disk array device shown in Fig. 36 or in the RAID5 type of disk array device shown in Fig. 37 is realized, so that, in a case of the RAID4 type of disk array device, for instance, disk devices 32-1 to 32-4 are used for storage of data, while the disk device 32-5 is used for parity. On the other hand, in a case of the RAID5 type of disk array device, like in a case of the RAID4 type of disk devices, any of the disk devices 32-1 to 32-5 is not used dedicatedly for parity although one disk device stores therein data having the same format in batch, and the disk devices are successively used as a disk device for storage of parity according to a prespecified sequence in response to a sector.

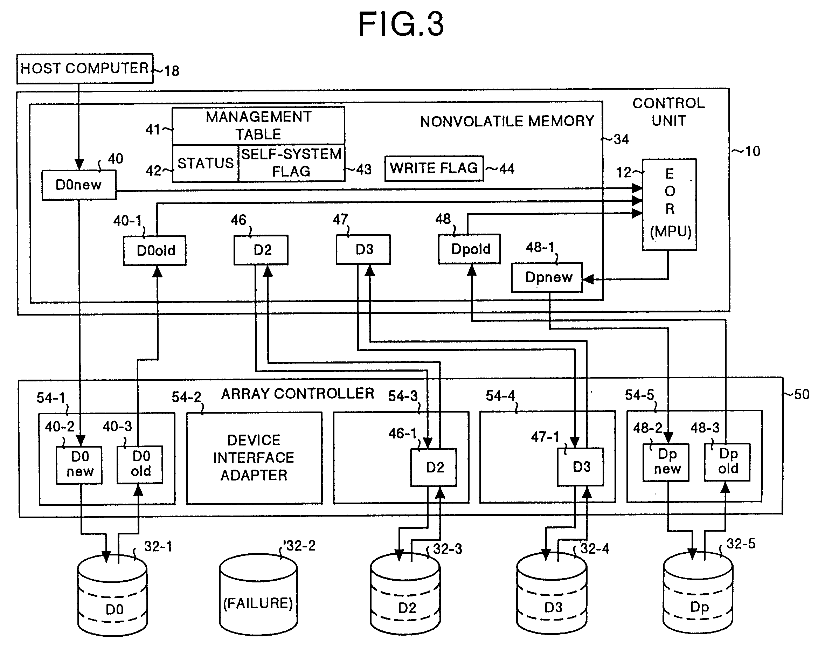

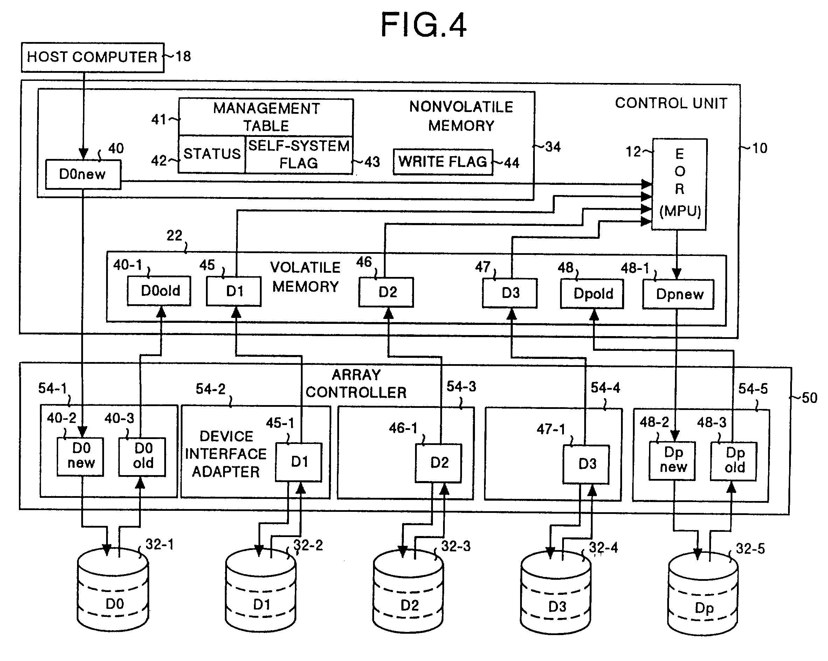

Fig. 3 and Fig. 4 are functional block diagrams each showing the disk array device according to Embodiment 2, and Fig. 3 shows a case where one of the disk units is faulty, and Fig. 4 shows a case where no device is faulty, namely where all the disk devices are normally working.

Fig. 3 and Fig. 4 assume a case where, of a plurality unit (5 units in Fig.3 and Fig. 4) of the disk devices 32-1 to 32-5, for instance, a disk device 32-5 is used as a disk device for parity. It is needless to say that, if the disk device 32-5 is of the RAID4 type, the disk device is used only for storage of parity, and in a case of the RAID5, the disk device is used for storage of parity in current data access.

When updating data (D0) in the specified disk device 32-1 to new data (D0 new) while one disk device 32-2 is faulty, as shown in Fig. 3, stored in a nonvolatile memory 34 in the control unit 10 are new data (D0 new) transferred from the host computer 18, a management table 41 showing progression of the write processing or the like, a write flag 44 indicating that an operation for writing is being executed, old data (D0 old) 40-1 read out from the disk device 32-1, data (D2, D3) 46, 47 read out from the normal disk devices 54-3 and 54-4, old parity (Dp old) 48 read out from the disk device for parity 32-5, and new parity (Dp new) 48-1 computed through exclusive-OR (EOR) among old data (D0 old) 40-1, new data (D0 new) 40, and old parity (Dp old) 48.

The processing for generating new parity (Dp new) 48-1 is executed in a parity generating unit 116 (Refer to Fig. 1) in the special write executing unit 110. It should be noted that the special write executing unit 110 is realized with the MPU 12 shown in Fig. 2.

To prevent generation of data loss, the special data write processing is executed. Namely, the new data (Do new) 40 stored in the nonvolatile memory 34 , other data (D2, D3) 46, 47, and new party (Dp new) 48-1 are sent to and stored in device interface adapters 54-1, 54-3, 54-4, 54-5 in the array controller 50.

The new data (0 new) 40-2, other data (D2, D3) 46-1, 47-1, and new parity (Dp new) 48-2 stored in the device interface adapters 54-1, 54-3, 54-4, 54-5 are concurrently written in the disk devices 32-1, 32-3, 32-4, 32-5 according to the RAID3 system. The processing for overwriting the new data (D0 new) in the disk device 32-1, to which the write processing is specified, is executed by the data write unit 113 in the special write executing unit 110.

A stage (status) of the write processing 42 and a self-system flag 43 indicating, when a plurality of array controllers are provided, whether the write processing is being executed by the system or by any other system are stored in the management table 41.

Computing for exclusive-OR is executed, for instance, by the MPU 12.

When the write processing not having been finished in the normal state is to be restored, the new data (Do new) 40, other data (D2, D3) 46, 47, and new parity (Dp new) stored in the nonvolatile memory 34 are concurrently written via the device interface adapters 54-1, 54-3, 54-4, 54-5 of the array controller 50 in the disk devices 32-1, 32-3, 32-4, and 32-5 according to the RAID3 system.

When data (D0) in the specified disk device 32-1 is to be updated to new data (Do new) in the state where all the disk devices 32-1, 32-2, 32-3, 32-4, 32-5 are operating, as shown in Fig. 4, the new data (D0 new) 40 transferred from the host computer 18, management table 41 showing a status of the write processing, and write flag 44 indicating that the write processing is being executed are stored in the nonvolatile memory 34 of the control unit 10.

Also stored in the nonvolatile memory 22 of the control unit 10 are old data (D0 old) 40-1 read out from the disk device 32-1 and old parity (Dp old) read out from the disk device for parity 32-5.

In this case, the ordinary write processing is executed. Namely, the new data (D0 new) stored in the nonvolatile memory 34 is sent to and stored in the device interface adapter 54-1 of the array controller 50, and the stored new data (D0 new) 40-2 are written in the disk device 32-1.

Computing for exclusive-OR (EOR) is executed in the MPU 12 depending on the new data (D0 new) 40 stored in the nonvolatile memory 34 and old data (D0 old) stored in the nonvolatile memory 22, and old parity (Dp old) 48 also stored in the nonvolatile memory 22 to obtain new parity (Dp new) 48-1, and the new parity (Dp new) 48-1 is stored in the nonvolatile memory 22 in the control unit 10. This new parity (Dp new) 48-1 is stored in the device interface adapter 54-5 of the array controller 50, and the stored new parity (Dp new) 48-2 is written in the disk device 32-5.

When write processing not having been finished in the normal state is to be restored, the new data (Do new) stored in the nonvolatile memory 34 is written via the device interface adapter 54-1 of the array controller 50 in the disk device 32-1. Also because the write processing was not finished in the normal state, old data (D0 old) and old parity (Dp old) have not been fixed yet, and for this reason data (D1, D2, D3) is read out from the disk devices 32-2, 32-3, 32-4 to generate new parity (Dp new) and are stored in the device interface adapters 54-2, 54-3, and 54-5.

The data (D1, D2, D3 ) 45-1, 46-1, 47-1 stored as described above are sent to and stored in the nonvolatile memory 22 in the control unit 10. And, new parity (Dp new) 48-1 is obtained from the data (D1, D2, D3) 45, 46, 47 stored in the nonvolatile memory 22 and new data (Do new) stored in the nonvolatile memory 34, and is written via the device interface adapter 54-5 of the array controller 50 in the disk device 32-5.

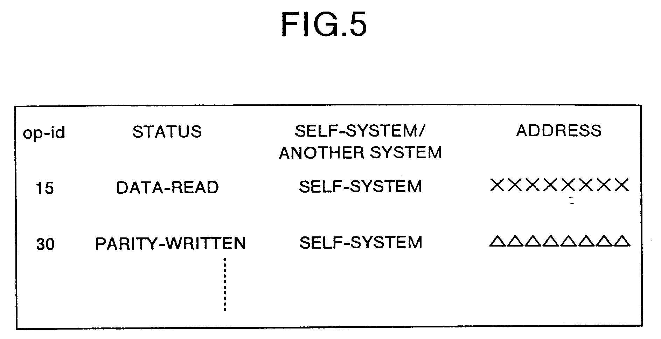

Fig. 5 shows an example of contents stored in the management table 41, which is stored in the nonvolatile memory 34. As shown in the figure, the items of "op-id", "status" corresponding to the status 42 in Fig. 3 and Fig. 4, "self system/other system" corresponding to the self-system flag 43 in Fig. 3 and Fig. 4, and "address" are stored in the management table 41.

The "op-id" is an ID for controlling write processing by the array controller 50; "status" indicates to which state the write processing has progressed; "self system/other system" indicates, where there are provided a plurality of array controllers, whether the controller having executed the processing shown in the status is in the system or in other system; and "address" indicates a site for storage of data or parity stored in the nonvolatile memory 34.

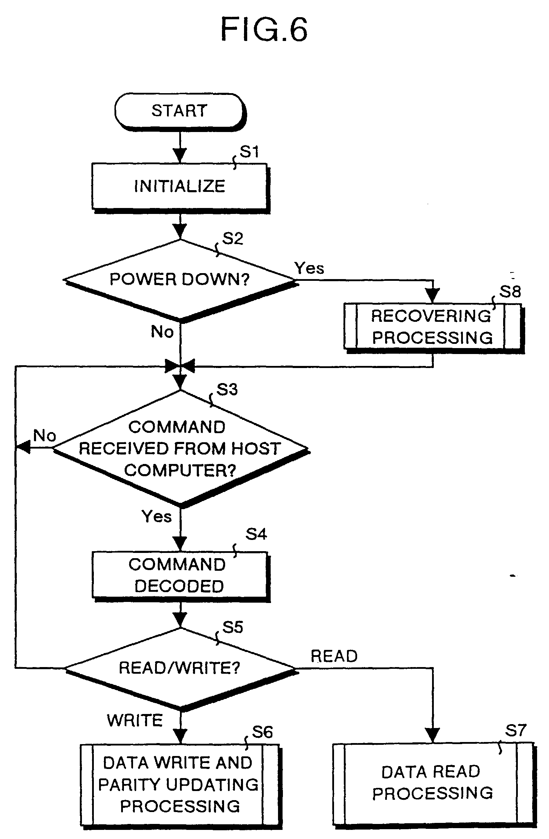

Fig. 6 is a flow chart showing the entire operating sequence in the disk array device shown in Fig. 3 and Fig. 4. In Fig. 6, when power for the disk array device is turned ON, a prespecified operation for initialization is executed according to the initial program routine (IPL) in step S1, and then checking as to whether power down has occurred or not is executed in step S2. When system control is started upon logging-on after the power is turned OFF by means of an ordinary operation for logging off, it is determined that power down has not occurred with the system control shifted to step S3, and reception of a command from the host computer 18 is waited.

When a command is received from the host computer 18 in step S3, system control shifts to step S4, where the command is decoded. When a demand for write access is detected in step S5, system control shifts to step S6 to execute data write and parity updating, and on the other hand when a demand for read access is detected in step S5, system control shifts to step S7 to execute data read.

On the other hand, when system control is started upon power ON, if it is determined in step S2 that power down has occurred, the processing for recovery is executed in step S8, and then the ordinary operating sequence from step S3 and on is executed. The program for executing this operating sequence is stored in a ROM 20 (Refer to Fig. 2) in the control unit 10, and the program is executed by the MPU 12 (Refer to Fig. 2).

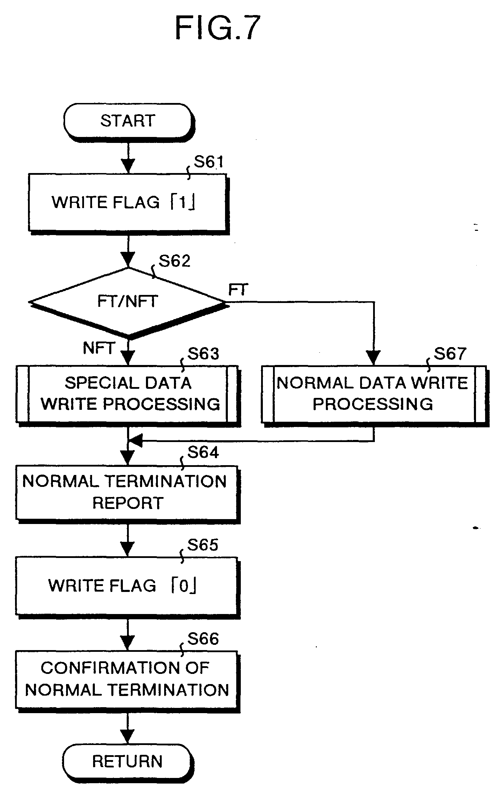

Fig. 7 is a flow chart showing details of the data write processing and parity updating shown in step S6 in Fig. 6. In Fig. 7, when a write command is received from the host computer 18, at first the write flag 44 is prepared in step S61 in the nonvolatile memory 34 in the control unit 10. Then system control shifts to step S62, and an operating state of all the disk devices 32-1, 32-2, 32-3, 32-4, and 32-5 is checked.

When there is any faulty disk (for instance, the disk device 32-2 in Fig. 3) (NFT), system control shifts to step S63 to execute the special data write processing, and if all the disk devices 32-1, 32-2, 32-3, 32-4, 32-5 are operating (FT), system control shifts to step S67 to execute the ordinary data write processing.

When data write is finished in step S63 or step S67, the controller 10 receives in step S64 a report indicating that the write processing was finished in the normal state from the array controller 50 with the write flag 44 deleted in step S65, and it is confirmed in step S66 that the write processing was finished. With this operation, the processing for writing data and updating parity is complete.

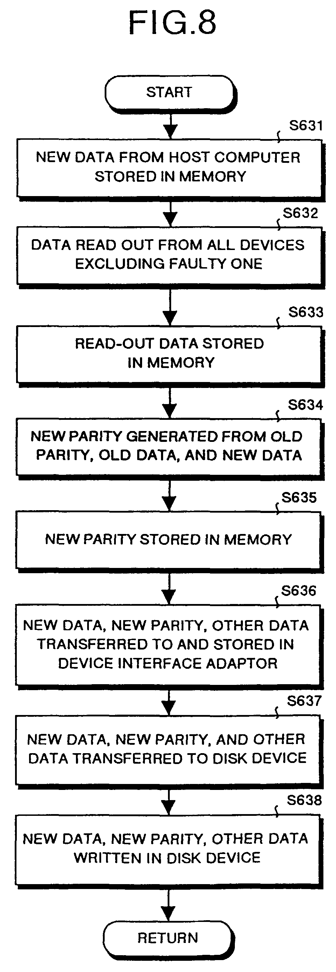

Fig. 8 is a flow chart showing details of the special data write processing shown in step S63 in Fig. 7. It should be noted that contents of the processing shown in Fig. 8 is the same as those in the functional block diagram in Fig. 3. In Fig. 8, new data to be written in the disk device is transferred from the host computer 18 in association with the write command, so that new data (D0 new) from the host computer 18 is stored in the nonvolatile memory 34 in the control unit 10 in step S631.

Then in step S632, old data (D0 old) 40-3, other data (D2, D3) 46-1, 47-1, and old parity (Dp old) 48-3 are read out from all the disk devices 32-1, 32-3, 32-4, 32-5 excluding a faulty disk device (Disk device 32-2 in Fig. 3) according to instructions from the device interface adapters 54-1, 54-3, 54-4, and 54-5 and are stored in the device interface adapters 54-1, 54-3, 54-4, and 54-5. The stored old data (D0 old) 40-3, other data (D2, D3) 46-1, 47-1, and old parity (Dp old) 48-3 are transferred in step S633 to the control unit 10 and stored in the nonvolatile memory 34.

Then system control shifts to step S634, and new parity (Dp new) 48-1 is generated from exclusive-OR among the old data (D0 old), old parity (Dp old) 48, and new data (D0 new) 40 each stored in the nonvolatile memory, and the new parity is stored in step S635 in the nonvolatile memory 34.

Then system control shifts to step S636; the new data (D0 new) 40 and other data (D2, D3) 46, 47, and new parity (Dp new) 48-1 each stored in the nonvolatile memory 34 are transferred and stored in the device interface adapters 54-1, 54-3, 54-4, 54-5; in step S637 new data (D0 new) 40-2, other data (D2, D3) 46-1, 47-1, and new parity (Dp new) 48-2 are transferred to the disk devices 32-1, 32-3, 32-4, 32-5; in step S638 new data (D0 new) 40-2, other data (D2, D3) 46-1, 47-1, and new parity (Dp new) 48-2 are concurrently written in the same regions as those for new data to be written in of the disk devices 32-1, 32-3, 32-4, and 32-5. With this operation, the special data write processing is finished.

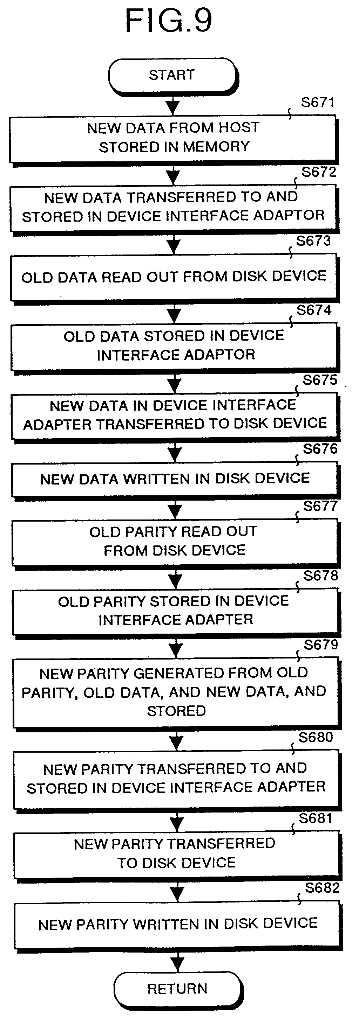

Fig. 9 is a flow chart showing details of the ordinary data write processing shown in step S67 in Fig. 7. It should be noted that contents of the processing shown in Fig. 9 is the same as those shown in the functional block diagram in Fig. 4. In Fig. 9, at first, in step S671, the new data (D0 new) 40 transferred from the host computer 18 in association with a write command is stored in the nonvolatile memory 34 of the control unit 10. Then in step S672, if the disk device 32-1 is specified as a disk device for data write, the new data (D0 new) is transferred to and stored in the device interface adapter 54-1.

Then in step S673, according to an instruction from the device interface adapter 54-1, contents of a region, in which the new data is to be written, of the disk device 32-1 is read as old data (D0 old) 40-3 and is stored in step S674 in the device interface adapter 54-1.

When the old data (D0 old) 40-3 has been stored, in step S675, new data (D0 new) in the device interface adapter 54-1 is transferred to the disk device 32-1, and in step S676, the new data (D0 new) 40-2 is written in the region in which the new data is to be written.

Then, contents of the same region of the disk device for parity 32-5 as the region, in which new data is to be written, of the disk device 32-1 is read as old parity (Dp old) 48-3 in step S677, and in step S678 the old parity (Dp old) 48-3 is stored in the device interface adapter 54-5.

Then in step S679, the old data (D0 old) 40-3 and old parity (Dp old) 48-3 stored in the device interface adapters 54-1, 54-5 are transferred to the nonvolatile memory 22 of the control unit 10 to stored therein, and further new parity (Dp new) 48-1 is generated from exclusive-OR among the old data (D0 old) 40-1 and old parity (Dp old) 48 stored in the nonvolatile memory 22 and new data (D0 new) stored in the nonvolatile memory 34, and the new parity is stored in the nonvolatile memory 22.

Then system control shifts to step S680; the new parity (Dp new) 48-1 stored in the nonvolatile memory 22 is transferred to the device interface adapter 54-5 and stored therein; further in step S681, the new parity (Dp new) 48-2 is transferred to the disk device 32-5; and in step S682. the new parity (Dp new) 48-2 is written in the same region of the disk device 32-5 as a region, in which new data is to be written in, of the disk device 32-1. With this operation, the normal data write processing is finished.

Herein, new parity (Dp new) is basically generated from exclusive-OR among new data (D0 new), old data (D0 old), and old parity (Dp old), but new parity (Dp new) may be generated after intermediate parity is generated as described in (1) to (3) below.

(1) At first intermediate parity is generated from exclusive-OR between new data (D0 new) and old data (D0 old), and new parity (Dp new) is generated from exclusive-OR between the intermediate parity and old parity (Dp old). Namely, the computing according to the following equations is executed:

New data (+) old data = Intermediate parity

Intermediate parity (+) old parity = New parity

(2) Intermediate parity is generated from exclusive-OR between old data (D0 old) and old parity (Dp old), and new parity (Dp new) is generated from exclusive-OR between the intermediate parity and new data (D0 new). Namely, computing according to the following equations is executed.

Old data (+) old parity = Intermediate parity

Intermediate parity (+) new data = New parity

(3) Intermediate parity is generated from exclusive-OR between old parity (Dp old) and new data (D0 new), and new parity is generated from exclusive-OR between the intermediate parity and old data (D0 old). Namely, the computing according to the following equations is executed:

Old parity (+) new data = Intermediate parity

Intermediate parity (+) old data = New parity

It should be noted that the generated intermediate parity is stored in the nonvolatile memory 22 or nonvolatile memory 34 of the control unit 10.

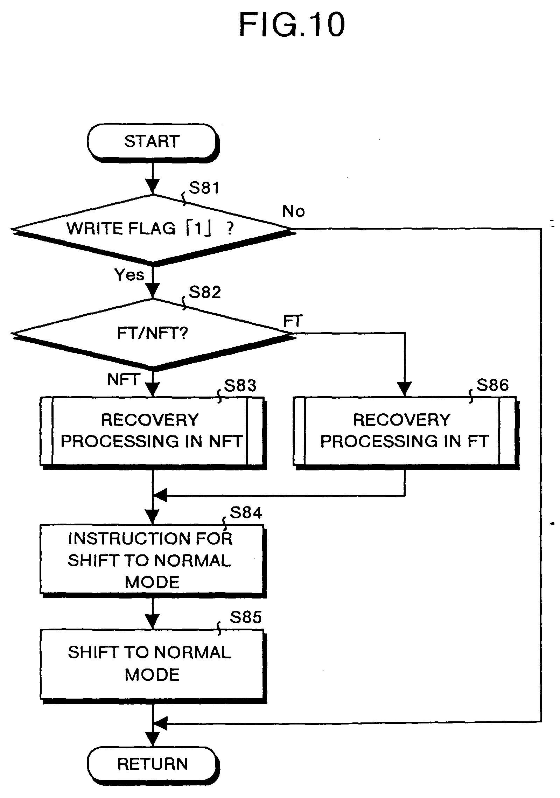

Fig. 10 is a flow chart showing details of the recovery processing shown in step S8 in Fig. 6. In step S2 in Fig. 6, if it is determined that power down has occurred, as shown in Fig. 10, at first in step S81, checking is executed as to whether the write flag 44 is provided in the nonvolatile memory 34 of the control unit 10 or not. If it is determined that the write flag 44 is not provided, it is regarded that no data nor parity was being written when power went down, and the processing for recovery is terminated immediately.
In step S81, if it is determined that the write flag 44 has been provided therein, system control shifts to step S82, and checking is executed as to whether all the disk devices 32-1, 32-2, 32-3, 32-4, and 32-5 are operating or not. If it is determined that there is any faulty disk device (disk device 32-2 in Fig. 3) (NFT), system control shifts to step S83 to enter the special write operation mode for NFT and execute the processing for recovery, and on the other hand, if it is determined that all the disk devices 32-1, 32-2, 32-3, 32-4, and 32-5 are operating normally (FT), system control shifts to step S86 to enter the special write operation mode for FT with the processing for recovery executed.
When the recovery processing is complete in step S83 or step S86, system control shifts to step S84, the host computer 18 instructs the control unit 10 to issue an instruction for shifting from the special write operation mode to the ordinary mode to the array controller 50, and when the control unit 10 receives the instruction, the control unit 10 issues an instruction for shifting to the ordinary mode to the array controller 50. Then in step S85 the array controller 50 receives the command, and shifts to the ordinary mode. With this operation, the recovery processing is finished.

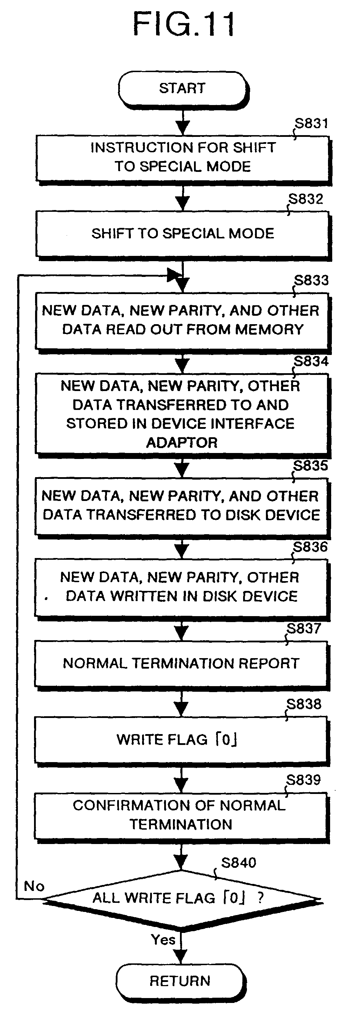

Fig. 11 is a flow chart showing in details the recovery processing in NFT in step S83 in Fig. 10. It should be noted that contents of the processing shown in Fig. 11 corresponds to the functional block diagram shown in Fig. 3. In Fig. 11, at first in step S831, the control unit 10 gives an instruction for shifting to the special write operation mode in NFT to the array controller 50. The array controller 50 receives the command in step S832 and shifts to the special write mode.
Then in step S833, new data (D0 new), other data (D2, D3) 46, 47, and new parity (Dp new) 48-1 are read out from the nonvolatile memory 34 of the control unit 10, and in step S834 the new data (D0 new) 40, other data (D2, D3) 46, 47, and new parity (Dp new) 48-1 are transferred to and stored in the device interface adapters 54-1, 54-3, 54-4, and 54-5.
Further in step S835, new data (D0 new) 40-2, other data (D2, D3) 46-1, 47-1, and new parity (Dp new) 48-2 are transferred to the disk devices 32-1, 32-3, 32-4, and 32-5, and in step S836 the new data (D0 new) 40-2, other data (D2, D3) 46-1, 47-1, and new parity (Dp new) 48-2 are concurrently written in the same regions of the disk devices 32-1, 32-3, 32-4, and 32-5 as the region, in which new data is to be written in, according to the RAID3 system.
Then in step S837, the control unit 10 receives the report that the write processing was finished in the normal state from the array controller 50, and in step S838, the write flag 44 is turned OFF, and it is confirmed in step S839 that the write processing was finished in the normal state. Then checking is executed as to other write flag 44 is effective or not, the operations from the steps S833 to S839 are repeatedly executed until there is no effective write flag 44, and when there is not effective write flag 44, the recovery processing in NFT is finished.

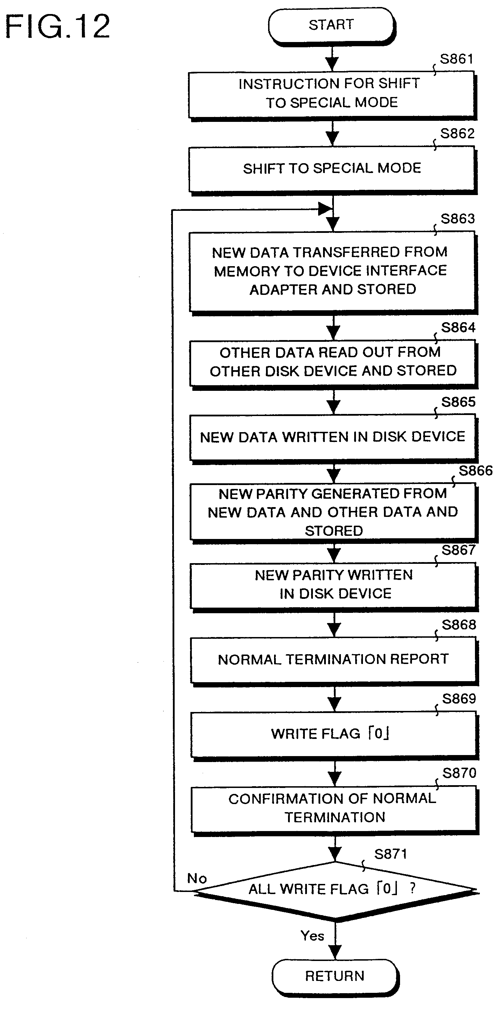

Fig. 12 is a flow chart showing in detail the recovery processing in FT shown in step S86 in Fig. 10. It should be noted that contents of the processing in Fig. 12 corresponds to the functional block diagram shown in Fig. 4. In Fig. 12, at first in step S861, the control unit 10 issues an instruction for shifting to the special write operation mode in FT to the array controller 50. The array controller 50 receives the command in step S862 and shifts to the special write processing.
Then in step S863, new data (D0 new) is read out from the nonvolatile memory 34 of the control unit 10, and the new data is transferred to and stored in the device interface adapter 54-1. Also in step S864, data (D1, D2, D3) is read out from the disk devices 32-2, 32-3, 32-4 excluding the disk device 32-1, in which new data (D0 new) is to be stored, and the disk device for parity 32-5, and the data (D1, D2, D3) 45-1, 46-1, 47-1 are stored in the device interface adapters 54-2, 54-3, 54-4.

Then in step S865, new data (D0 new) 40-2 in the device interface adapter 54-1 is transferred to the disk device 32-1 and the new data (D0 new) 40-2 is written in a region in which new data is to be written.

Then in step S866, the data (D1, D2, D3) 45-1, 46-1, 47-1 stored in the device interface adapters 54-2, 54-3, 54-4 are transferred to and stored in the nonvolatile memory 22 of the control unit 10, new parity (Dp new) 48-1 is generated from exclusive-OR among the data (D1, D2, D3) 45, 46, 47 stored in the nonvolatile memory 22 and the new data (D0 new) 40 stored in the nonvolatile memory 34, and the new parity is stored in the nonvolatile memory 22.

Then system control shifts to step S867, the new parity (Dp new) 48-1 stored in the nonvolatile memory 22 is transferred to and stored in the device interface adapter 54-5, and the stored new parity (Dp new) 48-2 is transferred to the disk device 32-5 and is written in the same region of the disk device 32-5 as a region, in which new data is to be written in, of the disk device 32-1.

Then in step S868, the control unit 10 receives a report that the write processing was finished in the normal state from the array controller 50, and in step S869 the write flag 44 is invalidated and it is confirmed in step S870 that the write processing was finished in the normal state. Then checking is executed as to whether any other write flag 44 is effective or not, and the operations in the steps S863 to S870 are repeatedly executed until there is no effective write flag 44, and when there is not effective write flag 44, the recovery processing in FT is finished.

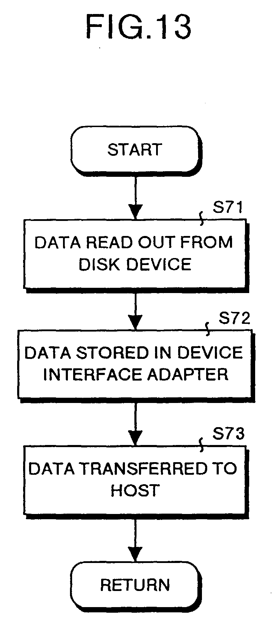

Fig. 13 is a flow chart showing details of the data read processing in step S7 in Fig. 6. In Fig. 13, when a read command from the host computer 18 is decoded, in step S71 data is read out from a disk device via a device interface adapter specified in step S71 as a target for data read, and after the data is stored in step S72 in the device interface adapter, and in step S73 the data is transferred to the host computer 18.

With the embodiment described above, the nonvolatile memory 34 is provided in the control unit 10, and when any disk devices goes wrong during the processing for writing data, the new data (D0 new) 40 transferred from the host computer 18 for updating, status 42 indicating progression of the data write processing, write flag 44, data read out from disk devices which are not faulty, namely old data (Do old) 40-1, old parity (Dp old) 48, other data (D2, D3) 46, 47, and new parity (Dp new) 48-1 generated from exclusive-OR among the new data (D0 new) 40, old data (D0 old) 40-1, and old parity (Dp old) 48 are stored in the nonvolatile memory 34, so that, if the write processing is not finished in the normal state due to power failure or for some other reasons during the processing for writing data and parity, when power supply is restarted, the new data (D0 new) 40 and other data (D2, D3) 46, 47, and new parity (Dp new) 48-1 stored in the nonvolatile memory 34 are written in a disk device, thus the data being easily recovered.

With the embodiment described above, the nonvolatile memory 34 is provided in the control unit 10, and when the data write processing is to be executed, if there is not faulty disk device, the new data (D0 new) 40 transferred from the host computer 18 for updating, status 42 indicating progression of the data write processing, and write flag 44 are stored in the nonvolatile memory 34, so that, if the write processing is not finished in the normal state due to power failure or for some other reasons during the processing for writing data or parity, when power supply is restarted, the data can easily be recovered by reading out data (D1, D2, D3) belonging to the same parity group from disk devices other than the disk device in which data is to be updated and the disk device for parity, generating new parity (Dp new) 48-1 from exclusive-OR between the data (D1, D2, D3) and the new data (D0 new) 40 stored in the nonvolatile memory 34, and writing the new parity (Dp new) 48-1 and new data (D0 new) stored in the nonvolatile memory 34 in a disk device anew.

Further with the embodiment described above, the write flag 44 is stored in the nonvolatile memory 34, after write processing is not finished in the normal state, when power supply is restarted, it can easily and visually be checked by referring to the write flag 44 whether there is left any data not written in the normal state or not, and for this reason, the processing for data recovery can rapidly be executed.

Further with the embodiment described above, as the status 42 is stored in the nonvolatile memory 34, after write processing is not finished in the normal state, when power supply is restarted, processing for data recovery can be continues from a section where the write processing in interrupted by referring to the status 42, and for this reason the processing for data recovery can be executed more rapidly.

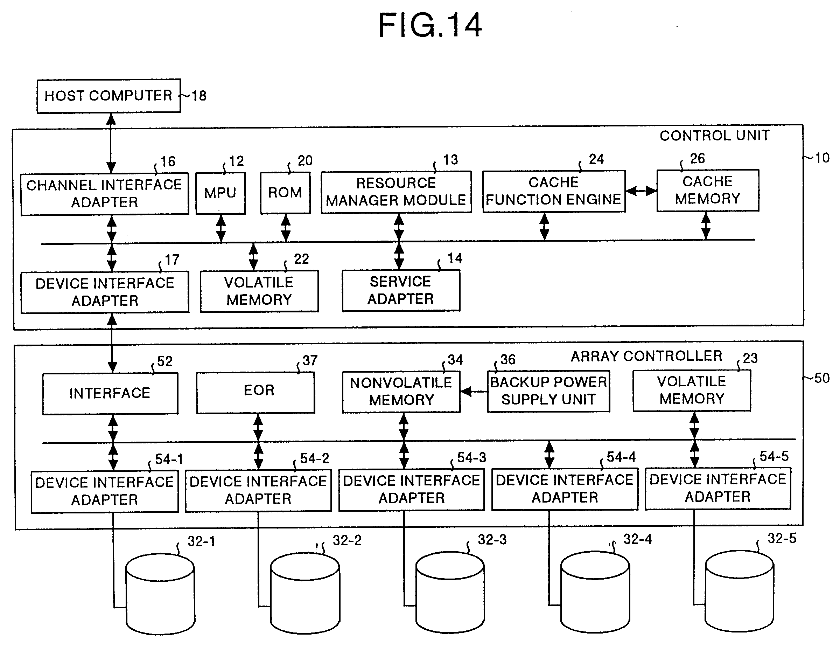

Fig. 14 is a block diagram showing a disk array device according to Embodiment 2 of the present invention. The disk array device shown in Fig. 14 is different from that shown in Fig. 1 in the points that there is not provided in the control unit 10 the nonvolatile memory 34 operable depending on a backup power supply 36 even when power is down, that there are provided in the array controller 50 the nonvolatile memory 34 and backup power supply 36 in place thereof, and that there are provided a volatile memory 23 and a logic circuit 37 for computing exclusive-OR (EOR) in the array controller 50. As other portions of the configuration are the same as those in Embodiment 1 above, so that the same reference numerals are assigned to the same components as those in the disk array device shown in Fig. 1 and description thereof is omitted herein.

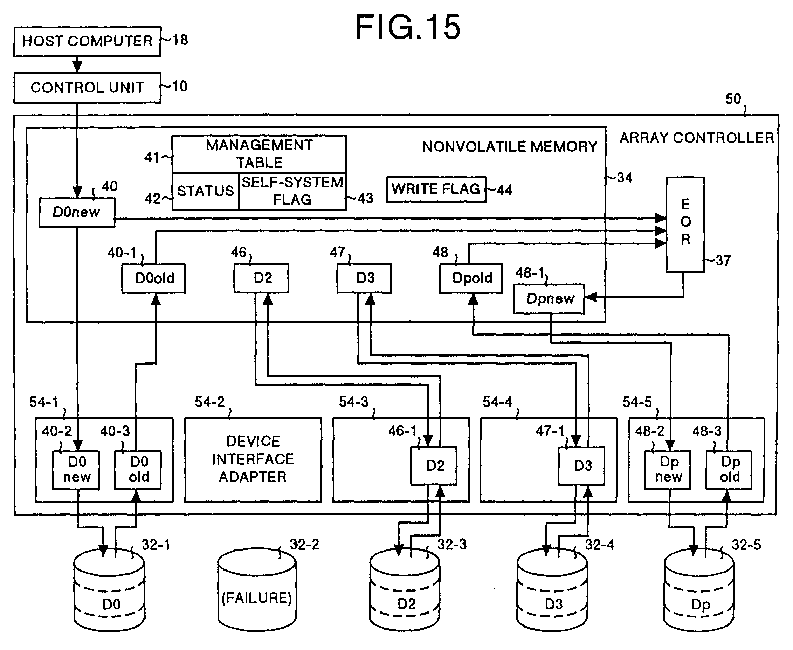

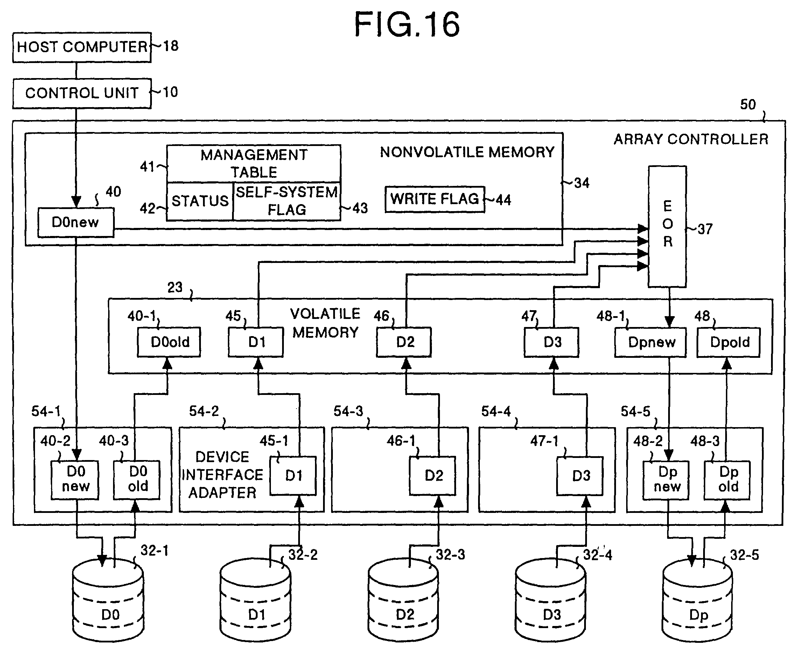

Fig. 15 and Fig. 16 are functional block diagrams each showing the disk array device according to Embodiment 2 shown in Fig. 14, and Fig. 15 shows a case where there is one faulty disk device, while Fig. 16 shows a case where there is not faulty disk device, namely a case where all the disk devices are operating normally. Like in Embodiment 1 described above, in Fig. 15 and Fig. 16, of a plurality units of disk device (5 units in the figures) 32-1 to 32-5, for instance, the disk device 32-5 is used for storage of parity.

In the state where one disk device 32-2 is faulty, when data (D0) in the specified disk device 32-1 is to be updated to new data (D0 new), as shown in Fig. 15, new data (D0 new) 40, management table 41 for storing therein the status 42 and the self-system flag 43, write flag 44, old data (Do old) 40-1, other data (D2,D3) 46,47, old parity (Dp old) 48, and new parity (Dp new) 48-1 are stored, like in Embodiment 1, in the nonvolatile memory 34 of the array controller 50.

The new parity (Dp new) 48-1 is obtained by computing exclusive-OR (EOR) among the old data (D0 old) 40-1, new data (D0 new) 40, and old parity (Dp old) 48 in the logic circuit 37 provided in the array controller 50.

Also in this Embodiment 2, like in Embodiment 1, when the processing for data write is to be executed, new data (D0 new) 40-2, other data (D2, D3) 46-1, 47-1 and new parity (Dp new) 48-2 are concurrently written in the disk devices 32-1, 32-3, 32-4, 32-5 according to the RAID3 system.

When write processing not finished in the normal state is to be recovered, new data (D0 new) 40, other data (D2, D3) 46, 47, and new parity (Dp new) 48-1 stored in the nonvolatile memory 34 are concurrently written via the device interface adapters 54-1, 54-3, 54-4, 54-5 in the disk devices 32-1, 32-3, 32-4, 32-5 according to the RAID3 system.

When data (D0) in the specified disk device 32-1 is updated to new data (D0 new) in the state where all the disk devices 32-1, 32-2, 32-3, 32-4, 32-5 are operating normally, as shown in Fig. 16, the new data (D0 new) 40, management table 41, and write flag 44 are stored in the nonvolatile memory 34 of the array controller 50. Also the old data (D0 old) 40-1 and old parity (Dp old) 48 are stored in the volatile memory 23 of the array controller 50.

The new data (D0 new) 40 stored in the nonvolatile memory 34 is written via the device interface adapter 54-1 in the disk device 32-1. Also computing for exclusive-OR (EOR) among the new data (D0 new) 40 stored in the nonvolatile memory 34, old data (D0 old) 40-1 stored in the volatile memory 23, and old parity (Dp old) 48 is executed in the logic circuit 37 to obtain new parity (Dp new) 48-1, and the new parity is stored in the volatile memory 23. This new parity (Dp new) 48-1 is written via the device interface adapter 54-5 in the disk device 32-5.

When write processing not having been finished in the normal state is to be recovered, the new data (D0 new) 40 stored in the nonvolatile memory 34 is written via the device interface adapter 54-1 in the disk device 32-1. Also data (D1, D2, D3) are read out from the disk devices 32-2, 32-3, 32-4, sent to and stored in the volatile memory 23.

Then new parity (Dp new) 48-1 is generated from the data (D1, D2, D3) 45, 46, 47 stored in the volatile memory 23 and new data (D0 new) 40 stored in the nonvolatile memory 34, and the new parity (Dp new) 48-1 is written via the device interface adapter 54-5 in the disk device 32-5.

Operations of the disk array device shown in Fig. 15 and Fig. 16 are the same as those shown in the flow charts shown in Fig. 6 to Fig. 13. For this reason description thereof is omitted herein.

In Embodiment 2 shown in Fig. 14 to Fig. 16, the nonvolatile memory 34 is provided in the array controller 50, and if there is any faulty disk device when data is to be written, new data (D0 new) 40, status 42, write flag 44, old data (D0 old) 40-1, old parity (Dp old) 48, other data (D2, D3) 46, 47, and new parity (Dp new) 48-1 are stored in the nonvolatile memory 34, so that, even if processing for writing data and parity is not finished in the normal state due to power failure or for some other reasons, when power supply is restarted, the data can easily be recovered by writing the new data (D0 new) 40, other data (D2, D3) 46, 47, and new parity (Dp new) 48-1 stored in the nonvolatile memory 34 in a disk device.

With the Embodiment 2 above, the nonvolatile memory 34 is provided in the array controller 50, and when data is to be written in, if there is no faulty disk device, new data (D0 new) 40, status 42, and write flag 44 are stored in the nonvolatile memory 34, so that, even if the processing for writing data and parity is not finished in the normal state due to power failure or for some other reasons, when power supply is restarted, data (D1, D2, D3) belonging to the same parity group is read out from disk devices other than a disk device, in which data is to be updated, and a disk device for storage of parity, new parity (Dp new) 48-1 is generated from the data (D1, D2, D3) and new data (D0 new) 40 stored in the nonvolatile memory 34, the new parity (Dp new) 48-1 and new data (D0 new) 40 are written anew in a disk device, thus the data being easily recovered.

With the Embodiment 2 above, as the write flag 44 is stored in the nonvolatile memory 34, after write operation is not finished in the normal state, when power supply is restarted, whether any data not having been written normally is left or not can visually be checked by referring to the write flag 44, so that the processing for data recovery can rapidly be executed.

Further with the Embodiment 2, the status 42 is stored in the nonvolatile memory 34, after write processing is not finished in the normal state, when power supply is restarted, the processing for recovery can be continued from the section where the write processing is interrupted by referring to the status 42, so that the processing for data recovery can rapidly be executed.

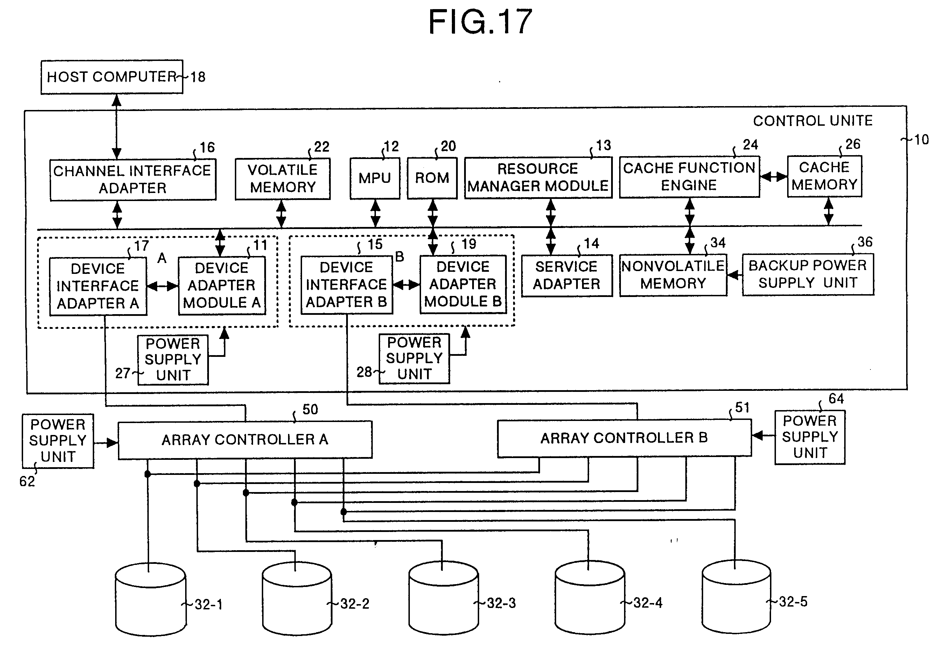

Fig. 17 is a block diagram showing the disk array device according to Embodiment 3 of the present invention. In the disk array device according to this embodiment, as shown in Fig. 17 connected to the control unit 10 with the host computer 18 connected thereto are two units of array controller A50 and array controller B51 driven by independent powers 62, 64 respectively, and for instance 5 units of disk device 32-1, 32-2, 32-3, 32-4, 32-5 are controlled by the array controller A50 and array controller B51. It should be noted that the same reference numerals are assigned to the same components as those in the disk array device shown in Fig. 1 and detailed description thereof is omitted herein.

Provided in the control unit 10 are, like in Embodiment 1, the MPU 12, ROM 20, volatile memory 22, cache function engine 24, cache memory 26, nonvolatile memory 34, back-up power supply unit 36, resource manager module 13, service adapter 14, and channel interface adapter 16.

Also to independently control the two units of array controller A50 and array controller B51, provided in the control unit 10 are a group A consisting of a device interface adapter A17 and a device adapter module A11, and a group B consisting of a device interface adapter B15 and a device adapter module B19. These groups A and B are driven by the independent power supply units 27, 28 respectively.

The array controller A50 has the same configuration as that of the array controller B51, and although not shown in the figure, there are provided, like in Embodiment 1 shown in Fig. 1, a plurality of device interface adapters functioning as an upper interface connected to the device interface adapter A17 or device interface adapter B15 in the control unit 10 and a lower interface with a plurality units of disk devices 32-1 to 32-5 connected thereto.

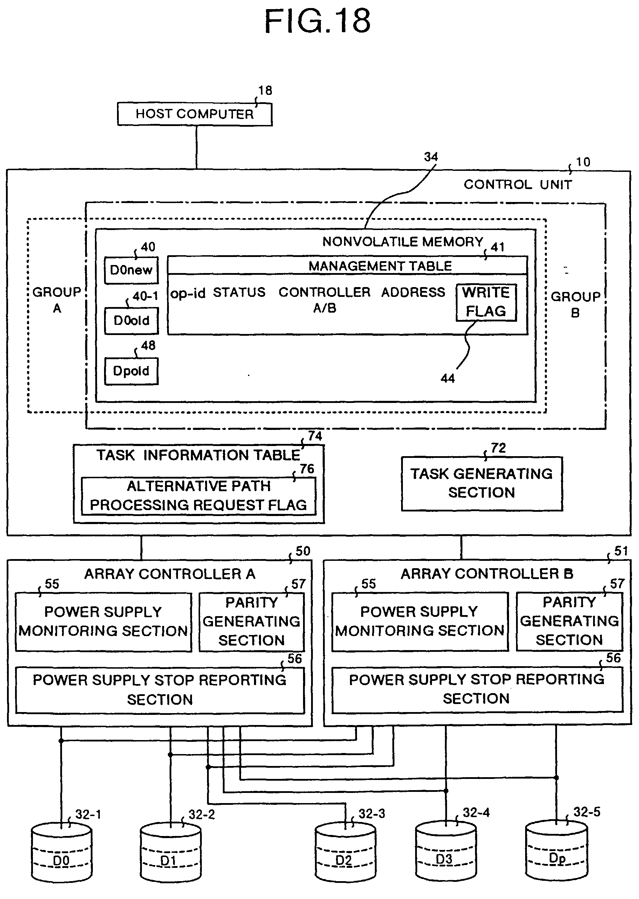

Fig. 18 is a functional block diagram showing the disk array device according to Embodiment 3 shown in Fig. 17. In Fig. 18, it is assumed that, of the plurality units of disk devices 32-1 to 32-5 (for instance 5 units in the figure), the disk device 32-5 is used for storage of parity. It is needless to say that, in a case of the RAID4 system, the disk device 32-5 is always used for storage of parity, and that, in the RAID5 system, the disk device is used for storage of parity in data access at the current point of time.

The nonvolatile memory 34 in the control unit 10 is shared by the group A consisting of the device interface adapter A17 and device adapter module A11 and the group B consisting of the device interface adapter B15 and device interface module B19. Namely the data or parity stored in this nonvolatile memory 34 can be written via any of the two array controllers 50, 51 into the disk devices 32-1, 32-2, 32-3, 32-4, and 32-5.

In the state where all the disk devices 32-1, 32-2, 32-3, 32-4, and 32-5 are operating normally, when data (D0) in the instructed disk device 32-1 is to be updated to new data (D0 new), as shown in Fig. 18, stored in the nonvolatile memory 34 of the control unit 10 new data (D0 new) 40 transferred from the host computer 18, old data (D0 old) 40-1 read out from the disk device 32-1, old parity (Dp old) 48 read out from the disk device for parity 32-5, management table 41 showing progression of the write processing, and write flag 44 indicating that write processing is being executed. Although there is no particular limitation, the write flag 44 is stored in the management table 41.

Also the control unit 10 has a task generating section 72 for generating a task for writing back the new data (D0 new) stored in the nonvolatile memory 34 into a disk device. The task generating section 72 is realized by, for instance, the MPU 12 in the control unit 10. The task information generated in the task generating section 72 is stored in a task information table 74 stored in a memory in the resource manager module 13, and execution of the task processing is instructed to an appropriate device adapter modules 11, 19 by the resource manager according to the task information.

Also stored in the task information table 74 is an alternative path processing request flag 76 indicating, when an abnormal state is generated in one of the array controllers, that write processing is executed by using an array controller working normally in place of the array controller in which the abnormal state has been generated.

The device adapter modules 11, 19 read out, when instructed by the resource manager, task information from the task information table 74, reads out new data (D0 new) 40 stored in the nonvolatile memory 34 according to the task information, and issues a write instruction to the array controllers 50, 51 in the system. Also the device adapter effects the write flag 44 in the management table 41 stored in the nonvolatile memory 34.

Each of the array controllers 50, 51 monitors, with a power supply monitoring section 55, power supply state to the another array controller 51 or 50, and when one of the array controllers 50 (or 51) detects that power supply to another array controller 51 (or 50) has been stopped, it is reported by a power supply stop reporting section 56 via the device interface adapter 17 (or 15) in the system to the device adapter module 11 (or 19) that power supply to another array controller 51 (or 50) has been stopped. The power monitoring section 55 and power supply stop reporting section 56 are realized by a microprocessor (MPU) or the like provided in the array controllers 50, 51.

Also provided in the array controllers 50, 51 is a parity generating section 57 for reading out other data in the same parity group, to which the new data (D0 new) 40 transferred from the nonvolatile memory 34 in the control unit 10 belongs, and generating new parity (Dp new) from the data and new data (D0 new) 40.

Reconstruction of parity by this parity generating section 57 is executed when a special mode is set with a flag in response to a write instruction. The parity generating section 57 is realized with a microprocessor (MPU) provided in the array controllers 50, 51 or the like.

Next description is made for a flow of processing operations by the disk array device shown in Fig. 18. The entire operation flow in this disk array device, a flow of operations for reading data, and a flow of recovery processing are almost the same as those shown in flow charts shown in Fig. 6, Fig. 13, and Fig. 12, respectively. For this reason, description of the entire operation flow, a flow of the recovery processing, and that of the processing for reading data in the disk array device shown in Fig. 18 is omitted herein.

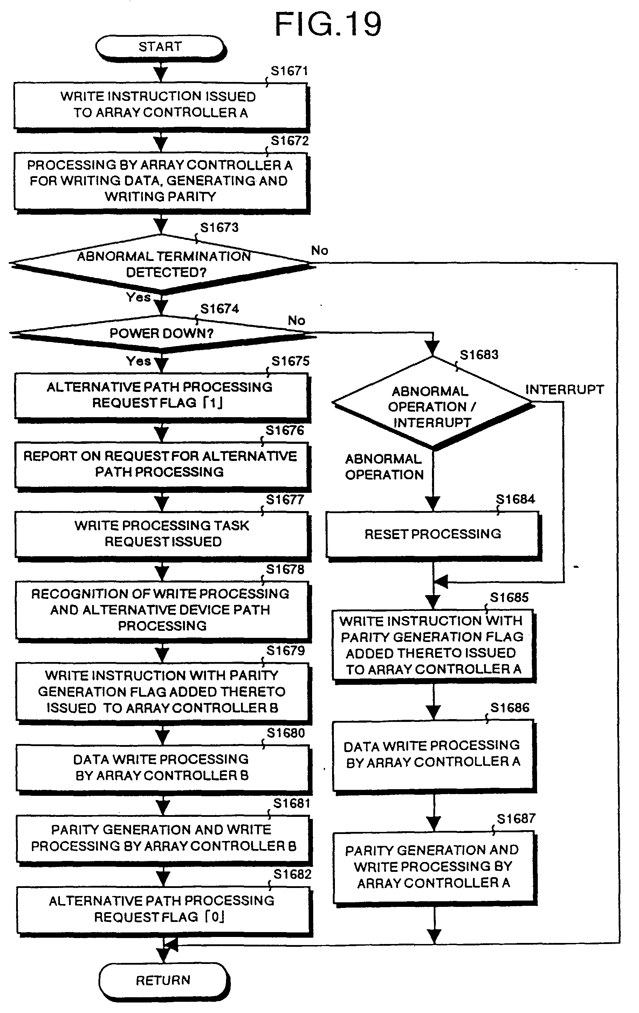

Fig. 19 is a flow chart showing details of the write processing in the disk array device shown in Fig. 18. In Fig. 19, when a write instruction is received from the host computer 18, at first a device adapter module A11 belonging to group A in the control unit 10 issues a data write command to the array controller A50 in the system in step S1671.

With this operation, in step S1672, the array controller A50 writes new data (D0 new) according to the ordinary write processing sequence shown in Fig. 9 in the disk device 32-1, and also generates new parity (Dp new) from the new data (D0 new) 40, old data (D0 old), and old parity (Dp old), and writes the new parity in the disk device for parity 32-5.

During the ordinary write processing in step S1672, namely before the control unit 10 receives a write complete signal from the array controller A50, if the control unit 10 receives an abnormal end signal in step S1673 and it is determined in step S1674 that a cause for abnormal termination is stop of power supply to the array controller A50, system control shifts to step S1675.

In step S1675, the device adapter module A11 in which an abnormal state has been detected sets an alternative path processing request flag 76 in the task information table 74 to have the write processing task, in which the abnormal state has been generated, executed by another device path, namely by the array controller B51. Then in step S1676, the device adapter module A11 issues a request for the alternative path processing for the task to the resource managers.

The resource manager, to which the alternative path processing is requested, issues a request for execution of the write processing task interrupted due to generation of an abnormal state to the device adapter controlling the alternative array controller B51 in step S1677.

The adapter having received the request recognizes, in step S1678, that contents of the accepted processing is write processing and at the same time, the alternative device path processing to be executed in place of the array controller A50 with any abnormality having been generated therein, and in step S1679, the adapter issues write instruction with a special flag called herein as a parity generation flag for reconstruction of parity data added thereto to the array controller B51.

The array controller B51 having received the write instruction with the parity generation flag added thereto reads out new data (D0 new) stored in the nonvolatile memory 34 in the control unit 10, and writes the data in the disk device 32-1.

Then in step S1681, the array controller B51 reads out data (D1, D2, D3) belonging to the same group to which the update data belongs from other disk devices 32-2, 32-3, 32-4 excluding the disk device 32-1 in which data is to be updated and the disk device for parity 32-5, generates new parity (Dp new) by computing exclusive-OR (EOR) among the data (D1, D2, D3) and new data (D0 new), and writes the new parity (Dp new) in the disk device for parity 32-5.

Finally in step S1682, the alternative path processing request flag 76 is invalidated, thus the data write processing being finished.

In step S1674, if it is determined that a cause for abnormal termination of the write processing is not due to stop of power supply to the array controller A50, system control shifts to step S1683. In step S1683, if it is determined that a cause for abnormal termination of the write processing is due to an abnormal operation, such as hung-up, of the array controller A50, system control shifts to step S1684 to reset the device interface adapter A17 and array controller A50, and then in S1685 the parity generation flag for reconstruction of parity data is added to the write instruction, which is again issued to the array controller A50.

On the other hand, if it is determined that the cause for abnormal termination of the write processing is interruption of the write processing by the array controller A50 into a disk device, system control directly shifts to step S1685 without resetting the array controllers, a write instruction with the parity generation flag for reconstruction of parity data added thereto is again issued to the array controller A50.

The array controller A50 having received the write instruction with the parity generation flag added thereto reads out new data (D0 new) 40 stored in the nonvolatile memory 34 in the control unit 10 in step S1686, and writes the read-out data in the disk device 32-1.

Then in step S1687, the array controller A50 reads out data (D1, D2, D3) belonging to the same parity group to which the data to be updated belongs from other disk devices 32-2, 32-3, 32-4 excluding the disk device 32-1 in which data updating is executed and the disk device for parity 32-5, generates new parity (Dp new) by computing exclusive-OR (EOR) among the read-out data (D1, D2, D3) and new data (D0 new), and writes the new parity in the disk device for parity 32-5. With this operation, the data write operation is finished.

In step S1673 in Fig. 1, if an abnormal termination signal is not received, it means that data updating by the array controller A50 was executed normally, and the write processing is finished immediately.

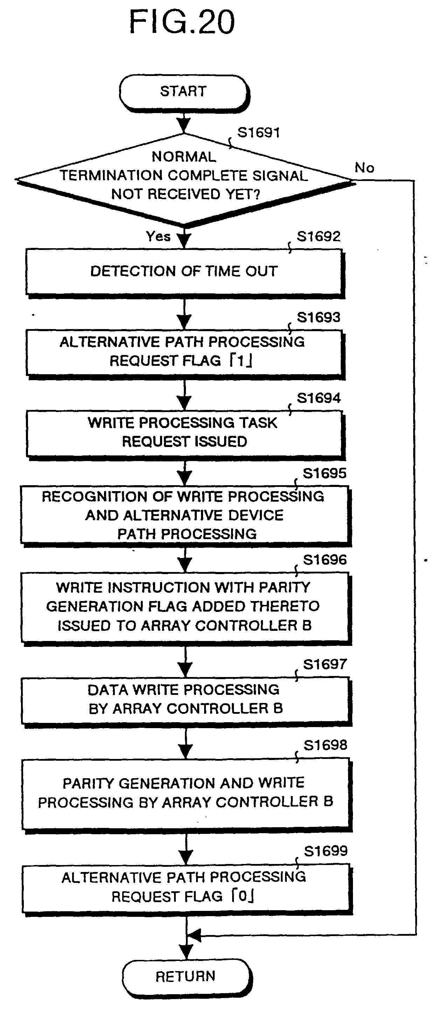

Fig. 20 is a flow chart showing detailed of the processing for a write instruction to the other device issued to the array controller A50 by a device adapter which has detected an abnormal state in the array controller A50 in the disk array device shown in Fig. 18. In Fig. 20, in step S1691 determination is made as to whether there is a write instruction not having received a normal termination complete signal from the array controller A50 or not, and if it is determined that there is a write instruction not having received the signal, in step S1692 time-out is detected by the logic for monitoring the task execution time by the resource manager.

Then in step S1693, the resource manager sets an alternative path processing request flag 76 in the task information table 74 to have a write processing task for the write instruction not having received the normal termination complete signal executed by another device path, namely by the array controller B51.

Also the resource manager issues a request for processing the write processing task for the write instruction not having received the normal termination complete signal to the device adapter module B19 controlling the alternative array controller B51 in step S1694. The device adapter received the request recognizes in step S1695 that contents of the received processing is write processing and also alternative device path processing in place of the array controller A50 in which an abnormal state was generated, and issues in step S1696 a write instruction with a special flag described herein as a parity generation flag for reconstruction of parity data added thereto to the array controller B51.

The array controller B51 having received the write instruction with the parity generation flag added thereto reads out new data (D0 new) 40 for the current write processing stored in the nonvolatile memory 34 in the control unit 10, and writes the read-out data in the disk device 32-1.

Then in step S1698, the array controller B51 reads out data (D1, D2, D3) belonging to the same parity group to which the data to be updated belongs from other disk devices 32-2, 32-3, 32-4 excluding the disk device 32-1 in which data is to be updated and the disk device for parity 32-5, generates new parity by computing exclusive-OR (EOR) among the read-out data (D1, D2, D3) and new data (D0 new), and writes the new parity in the disk device for parity 32-5.

Finally in step S1699, the alternative path processing request flag 76 is invalidated, and the data write processing is finished.

In step S1691, it is determined that there is any write instruction not having received the normal termination complete signal from the array controller A50, the processing is terminated immediately.

With the Embodiment 3 shown in Fig. 17 to Fig. 20, the nonvolatile memory 34 is provided in the control unit 10, and when data is written in, the new data (D0 new) 40, a status indicating a stage of write processing, and a management table 41 storing therein a flag indicating an array controller having executed the processing shown in the status, old data (0 old) 40-1 and old parity (Dp old) 48 are stored in the nonvolatile memory 34, so that, even if any abnormal state is generated in one of the array controllers, the write processing can be continued by another array controller in place of the array controller in which the abnormal state was generated, and for this reason data consistency can be maintained.

With the Embodiment 3 above, new data (D0 new) 40 and management table 41 storing therein a status of write processing and a flag indicating an array controller are stored in the nonvolatile memory 34, so that, after the write processing for writing data and parity is not finished in the normal state, when power supply is restarted, data can easily be recovered by reading out data (D1, D2, D3) belonging to the same parity group from disk devices other than the disk device in which data is to be updated and that for parity, generating new parity (Dp new) 48-1 from the data (D1, D2, D3) and the new data (D0 new) stored in the nonvolatile memory 34, and writing the new parity (Dp new) 48-1 and new data (D0 new) anew in a disk device.

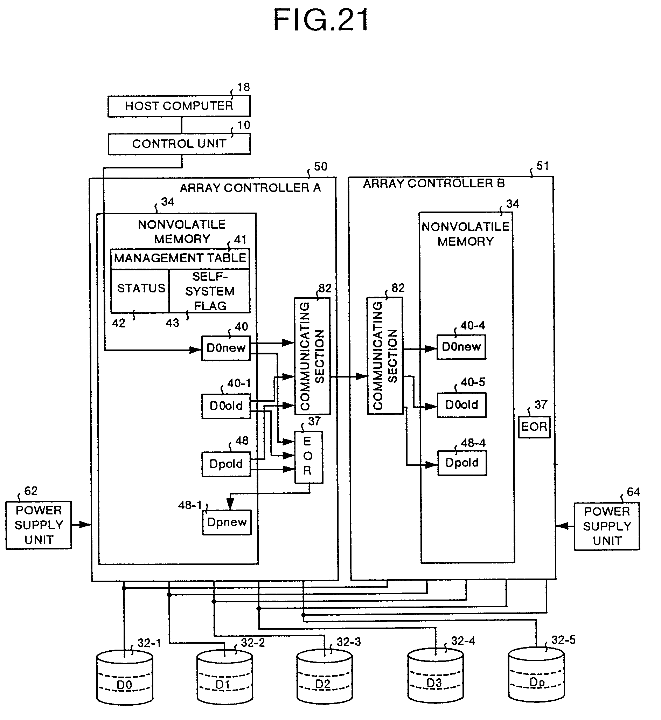

Fig. 21 is a functional block diagram showing a disk array device according to Embodiment 4 of the present invention. In this disk array device according to Embodiment 4, as shown in Fig. 21, connected to the control unit 10 with the host computer 18 connected thereto are two units of array controller A50 and array controller B51 driven by independent power supply units 62, 64 respectively, and for instance five units of disk devices 32-1, 32-2, 32-3, 32-4, and 32-5 are controlled by the array controller A50 and array controller B51. It should be noted that the same reference numerals are assigned to the same components as those in the disk array device shown in Fig. 2 and detailed description thereof is omitted herein.

Although not shown in the figure, provided in the control unit 10 are, like in Embodiment 1, an MPU, a ROM, a volatile memory, a cache function engine, a cache memory, a resource manager module, a service adapter, and a channel interface adapter.

Configuration of the array controller A50 is the same as that of the array controller B51, and although not shown herein, like in Embodiment 1 shown in Fig. 2, a plurality units of interface adapter functioning as an upper interface connected to a device interface adapter not shown in the control unit 10, and as a lower interface to which a plurality units of disk devices 32-1 to 32-5 are connected are provided therein.

Also provided in the array controller A50 and array controller B51 are nonvolatile memory 34 and back-up power supply units (not shown) for supplying power to the nonvolatile memory 34 respectively (not shown). The new data (D0 new) 40 transferred when data is to be written in a disk device, for instance, from the control unit 10, old data (D0 old) 40-1 and old parity (Dp old) 48 read out from the disk device, new parity (Dp new) 48-1 newly generated, a status 42 indicating a stage of write processing, and a management table 41 storing therein a self-system flag indicating the array controller having executed the processing shown in the status are stored in the nonvolatile memory 34 in the array controller A50.

Stored in the nonvolatile memory 34 of the array controller B51 are, for instance, at least new data (D0 new) 40-4, old data (D0 old) 40-5, and old parity (Dp old) 48-4.

Also a communicating section 82 for communication with a controller in another device is provided in each of the array controller A50 and array controller B51. Transaction of new data (D0 new), old data (D0 old) and old parity (Dp old), and a report of the normal termination of write processing is executed through this communicating section 82. The communicating sections 82 are connected to each other via a PCI bus generally employed, for instance, in personal computers or the like.

Also provided in each of the array controller A50 and array controller B51 is a logic circuit 37 for preparing new parity (Dp new) by computing exclusive-OR (EOR) among the new data (D0 new), old data (D0 old), and old parity (Dp old).

Either one of the array controller A50 and array controller B51 can write data or parity in the disk devices 32-1 to 32-5.

In the example shown in Fig. 21, it is assumed that, of a plurality units of disk devices 32-1 to 32-5 (for instance, 5 units in the figure), for instance the disk device 32-5 is used for storage of parity. It is needless to say that the disk device 32-5 is always used for storage of parity in the RAID4 system, and that the disk device 32-5 is positioned as a disk device for storage of parity in the current data access.

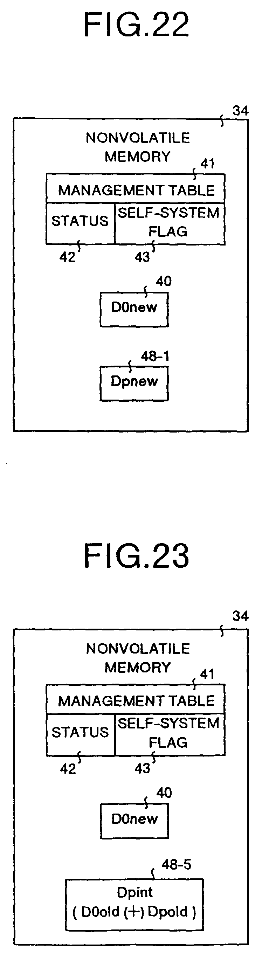

Fig. 22 shows a case where the management table 41, new data (Do new), and new parity (Dp new) 48-1 are stored in the nonvolatile memory 34 in the array controller A50. In this case, although not shown in the figure, new data (D0 new) and new parity (Dp new) are stored in the nonvolatile memory 34 in the array controller B51.

Fig. 23 shows a case where the management table 41, new data (D0 new) 40, intermediate parity (Dp int) 48-5 generated by computing exclusive-OR (EOR) among old data (D0 old) and old parity (Dp old) are stored in the nonvolatile memory 34 of the array controller A50. In this case, although not shown in the figure, new data (D0 new) and intermediate parity (Dp int) are stored in the nonvolatile memory 34 in the array controller B51.

Next description is made for a flow of operational sequence in the disk array device shown in Fig. 21. This entire operational flow in this disk array and a flow of operations for reading out data are substantially the same as those in Fig. 6 and Fig. 13. So description of the entire operational flow and an operational flow in data read processing in the disk array device shown in Fig. 21 are omitted herein.

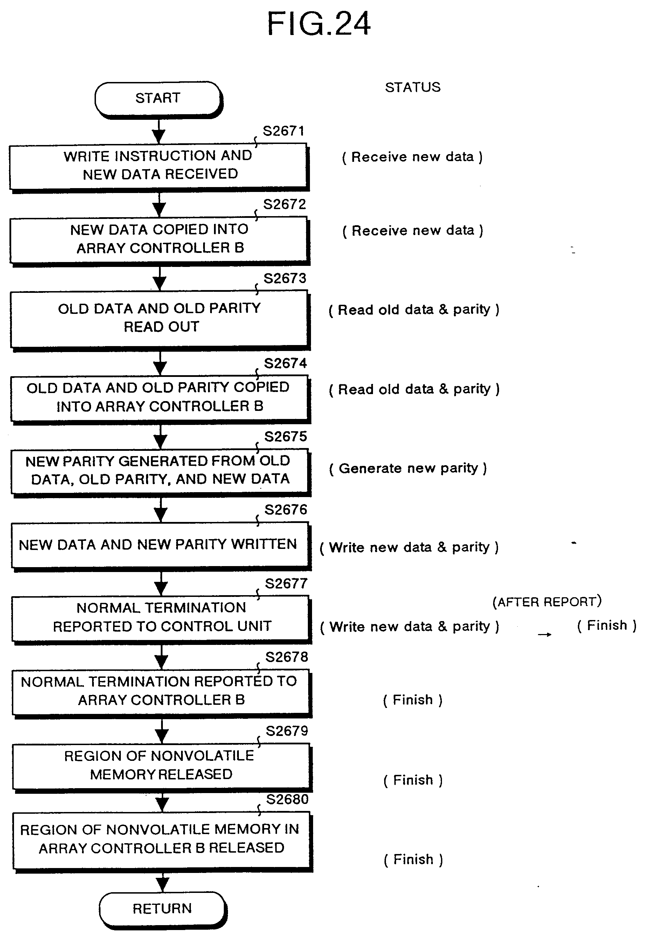

Fig. 24 is a flow chart showing details of the write processing in the disk array device shown in Fig. 21. It should be noted that a status of each step (a stage of write processing) is also shown in the right side of the figure. In Fig. 24, at first in step S2671, the array controller A50 receives new data (D0 new) together with a write instruction from the control unit 10 and stores the new data (D0 new) 40 in the nonvolatile memory 34 in the array controller A50. The status in this step is "Receive new data".

Then in step S2672, the array controller A50 transfers new data (D0 new) via the communicating section 82 to the other array controller B51, while the array controller B51 receives the new data (D0 new) transferred thereto and stores the new data (Do new) in the nonvolatile memory 34 in the array controller B51. With this operation, the new data (D0 new) 40-4 is copied into the array controller B51. The status at this point of time is " Receive new data".

Then in step S2673, the array controller A50 reads out the old data (D0 old) and old parity from the disk devices 32-1, 32-5, and stores the old data (D0 old) 40-1 and old parity (Dp old) 48 in the nonvolatile memory 34 in the array controller A50. The status at this point of time is "Read old data & parity".

Then in step S2674, the array controller A50 transfers old data (D0 old) and old parity (Dp old) via the communicating section 82 to the array controller B51, and on the other hand, the array controller B51 receives and stores the old data (D0 old) and old parity (Dp old) transferred thereto in the nonvolatile memory 34 in the array controller B51.

With this operation, the old data (D0 old) 40-5 and old parity (Dp old) 48-4 have been copied. The status at this point of time is " Read old data & parity".

Then in step S2675, the array controller A50 generates new parity (Dp new) 48-1 from the new data (D0 new) 40, old data (D0 old) 40-1, and old parity (Dp old) 48 stored in the nonvolatile memory 34 in the array controller A50, and stores the new parity in the nonvolatile memory 34 in the array controller A50. The status at this point of time is "Generate new parity".

Then in step S2676, the array controller A50 writes new data (D0 new) 40 and new parity (Dp new) 48-1 at appropriate places in the disk devices 32-1, 32-5. The status at this point of time is "Write new data & parity".

Then in step S2677, the array controller A50 reports to the control unit 10 that the write processing was finished in the normal state. The status at this point of time is changed from "Write new data & parity" to "Finish" after the report of normal termination is complete.

Then in step S2678, the array controller A50 reports that the write processing was finished in the normal state to the array controller B51. The status at this point of time is "Finish".

Then in step S2679, the array controller A50 releases the region occupied by the new data (D0 new) 40, old data (D0 old) 40-1, old parity (Dp old), new parity (Dp new) 48-1 and status 42 stored in the nonvolatile memory 34 in the array controller A50. The status at this point of time is "Finish".

In step S2680, the array controller B51 releases, when having received the report of normal termination from the array controller A50, the region occupied by the new data (D0 new) 40-4, old data (D0 old) 40-5, and old parity (Dp old) 48-4 stored in the nonvolatile memory 34 in the array controller B51. The status at this point of time is "Finish". With this operation, the write processing is finished.

It should be noted that, when write processing is interrupted due to generation of abnormal state such as stop of power supply to the array controller A50, abnormal operations of the array controller A50 such as hanging-up, or interruption of write processing into a disk device by the array controller A50, like in the write processing in Embodiment 3 shown in Fig. 19, the write processing may be continued by the array controller B51 in place of the array controller A50.

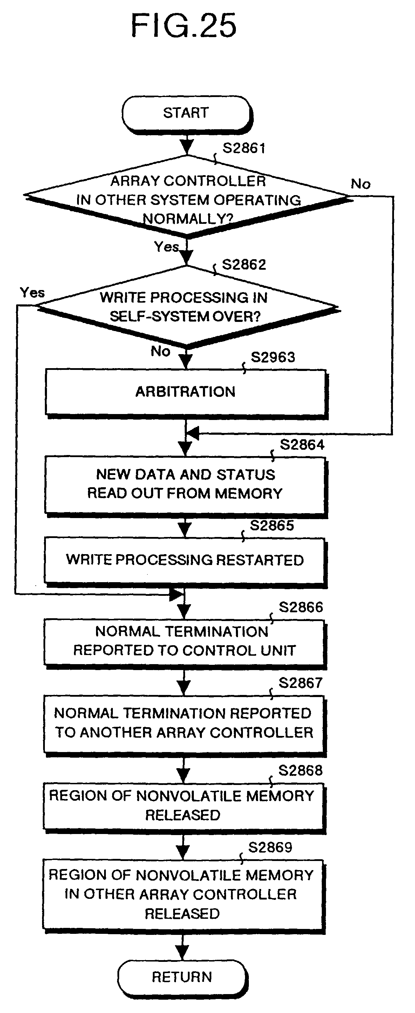

Fig. 25 is a flow chart showing details of the recovery processing in the disk array device shown in Fig. 21. In Fig. 25, when power is turned ON, at first in step S2861, the array controller A50 (or B51) determines whether a controller in another system, namely the array controller B51 (or A50) is operating normally or not.

When the array controller B51 (or A50) is operating normally, in step S2862, whether the write processing in the system, namely by the array controller A50 (or B51) has been finished by the array controller B51 (or A50) or not.

When the write processing in the system has not been finished, in step S2683, arbitrary is made as to which of the array control A50 and array controller B51 should execute the write processing not finished yet. This arbitration may be executed, for instance, in the way where either one of the array controller A50 and array controller B51 started first becomes a master and the one started later becomes a slave one (contrary one is also allowable), and the controller positioned as a master executes the write processing. At previously priority orders of primary and secondary ones are assigned to the array controller A50 and array controller B51, and the primary controller may execute the write processing.

When a controller, which executes the write processing, is fixed through arbitration, the array controller taking charge for the write processing reads out in step S2864 new data (D0 new) from the nonvolatile memory 34 in the array controller, and also reads out the status 42 from the nonvolatile memory 34 in the array controller A50, and in step S2865 restarts the write processing from the interrupted section according to the read-out status.

When the write processing is finished, in step 2866, the array controller having restarted the write processing reports to the control unit 10 that the write processing was finished in the normal state, and also reports in step S2867 to the other array controller that the write processing was finished in the normal state.

Then in step S2868, the array controller having restarted the write processing releases a region for new data (D0 new), old data (D0 old), old parity (Dp old) each stored in the nonvolatile memory 34 in the array controller, or a region for new parity (Dp new) when new parity is stored therein, or a region for status when a status is stored therein.

Also in step S2869, also the array controller not having taken charge for restart of the write processing releases a region for new data (D0 new), old data (D0 old), old parity (Dp old) each stored in the nonvolatile memory 34 in the array controller, or a region for new parity (Dp new) when new parity is stored therein, or a region for status when status is stored therein. With this operation, the recovery processing is finished.

In step S2862, if the write processing in the system has been finished, the write processing is not restarted, system control shifts to step S2866 to report normal termination of the write processing (step S2866 to S2867) and also releases a region in the nonvolatile memory 34 (step S2868 to S2869), and the recovery processing is finished.

Also in step S2861, if the array controller B51 (or A50) in the other system is not operating normally, system control shifts to step S2864, the array controller A50 (or B51) in the current system restarts the write processing to execute the operations in step S2864 to S2869, and the recovery processing is finished.

It should be noted that the same operational sequence is followed when the management table 41, new data (D0 new) 40, and new parity (Dp new) 48-1 are stored in the nonvolatile memory 34 as shown in Fig. 22, or when the management table 41, new data (D0 new) 40, intermediate parity (Dp int) 48-5 are stored in the nonvolatile memory 34 as shown in Fig. 23.

With Embodiment 4 shown in Fig. 21 to Fig. 25, the nonvolatile memory 34 is provided in each of the array controller A50 and array controller B51, and when data is written in, new data (D0 new) 40, status 42 indicating a stage of write processing, old data (D0 old) 40-1, old parity (Dp old) 48, new parity (Dp new) 48-1 or the like are stored in the nonvolatile memory 34 of the array controller A50, and further each of the data is copied in the nonvolatile memory 34 of the array controller B51, so that, even if the processing for writing data or parity is not finished in the normal state due to power failure or for some other reason, when power supply is restarted, the data can easily be recovered by using the new data stored in the nonvolatile memory 34 in the array controller A50 or in the nonvolatile memory 34 of the array controller B51.

Further with Embodiment 4 above, if any abnormality is generated in the write processing by one of the array controllers, the write processing can be continued by another controller in place of the array controller in which abnormality was generated, so that data consistency can be maintained.

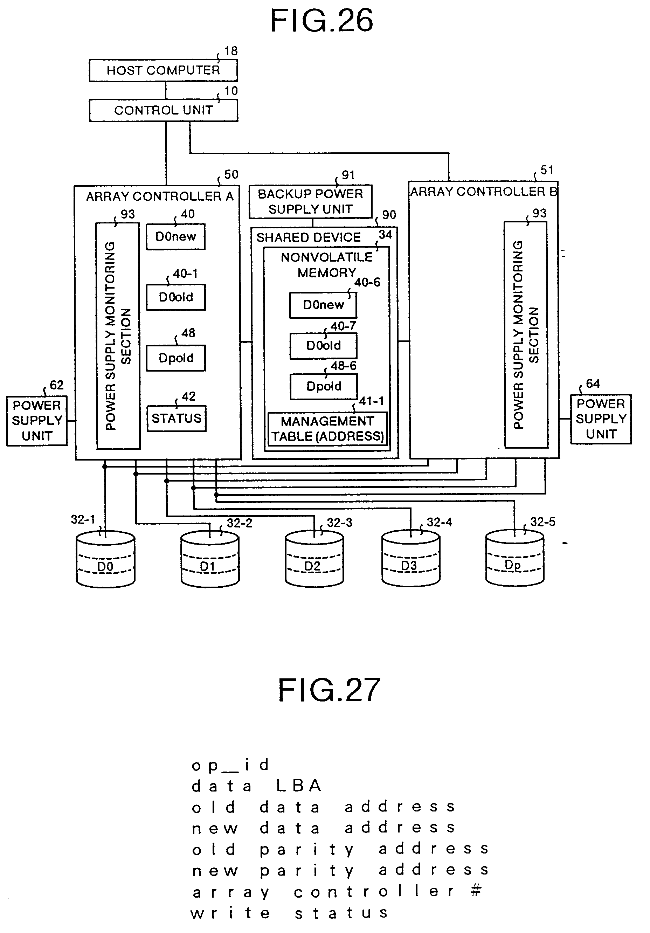

Fig. 26 is a functional block diagram showing a disk array device according to Embodiment 5 of the present invention. In this disk array device according to Embodiment 5, as shown in Fig. 26, connected to the control unit 10 with the host computer 18 connected thereto are two units of array controller A50 and array controller B51 driven by independent power supply units 62, 64, respectively, and for instance 5 units of disk devices 32-1, 32-2, 32-3, 32-4, and 32-5 are controlled by the array controller A50 and array controller B51, and a shared device 90 having the nonvolatile memory 34, which can be used to write data in or read data from by either one of the array controller A50 and array controller B51, is connected to the array controller A50 as well as to the array controller B51.

Power is applied to this nonvolatile memory 34 from a back-up power supply unit 91. It should be noted that the same reference numerals are assigned to the same components as those in the disk array device shown in Fig. 2 and description thereof is omitted herein.

Although not shown in the figure, provided in the control unit 10 are, like in Embodiment 1, an MPU, a ROM, a volatile memory, a cache function engine, a cache memory, a resource manager module, a service adapter, and a channel interface adapter.

Configuration of the array controller A50 is the same as that of the array controller B51, and although now shown herein, like in Embodiment 1 shown in Fig. 2, a plurality units of device interface adapter functioning as an upper interface connected to a device interface adapter not shown in the control unit 10, and as a lower interface to which a plurality units of disk devices 32-1 to 32-5 are connected are provided therein.

Also provided in each of the array controller A50 and array controller B51 is a logic circuit for preparing new parity (Dp new) by computing exclusive-OR (EOR) among the new data (D0 new), old data (D0 old), and old parity (Dp old).

Both the array controller A50 and array controller B51 can write data or parity in the disk devices 32-1 to 32-5.

When data is written in a disk device, new data (D0 new) 40-6, old data (D0 old) 40-7, old parity (Dp old) 48-6, and management table 41-1 with management information such as status 42 stored therein transferred from the array controller executing the write processing (array controller A50 in the figure) is stored in the nonvolatile memory 34.

Also in this disk array device, provided in each of the array controller A50 and array controller B51 is a power monitoring section 93 for mutually monitoring power supply state in the other array controller, so that power supply state in an array controller during write processing can always be monitored. The power monitoring section 93 for instance periodically sends a message to the other array controller, and monitors a response to the message.

In the example shown in Fig. 26, it is assumed that, of a plurality of disk devices 32-1 to 32-5 (for instance 5 units in the figure), the disk device 32-5 is used for storage of parity. It is needless to say that, in a case of the RAID4, the disk device 32-5 is always used for storage of parity, and that, in a case of the RAID5, the disk device 32-5 is positioned as that for storage of parity in the current data access.

Fig. 27 shows an example of contents of the management table stored in the nonvolatile memory 34 in the shared device 90. As shown in the figure, stored in the management table 41-1 are "op_id" indicating for instance an identifier for differentiating each write processing; "data LBA" indicating a logical block address as an object for the current write processing; "old data address" indicating an address where old data (D0 old) is temporally stored; "new data address" indicating an address where new data (D0 new) is temporally stored; "old parity address" indicating an address where old parity (Dp old) is temporally stored; "new parity address" indicating an address where new parity (Dp new) is temporally stored; "array controller #" indicating an identifier such as a number identifying an array controller which manages this management table 41-1; and "write status" indicating a current status of write processing.

Next description is made for an operational flow in the disk array device shown in Fig. 26. The entire operational flow, a flow of operations for reading out data, and an operational for recovery processing in this disk array device are substantially the same as those shown in the flow charts in Fig. 6, Fig. 13, and Fig. 12, respectively. For this reason, the entire operations, a flow of operations in the recovery processing, and that of the data read processing in the disk array device shown in Fig. 26 are omitted herein.

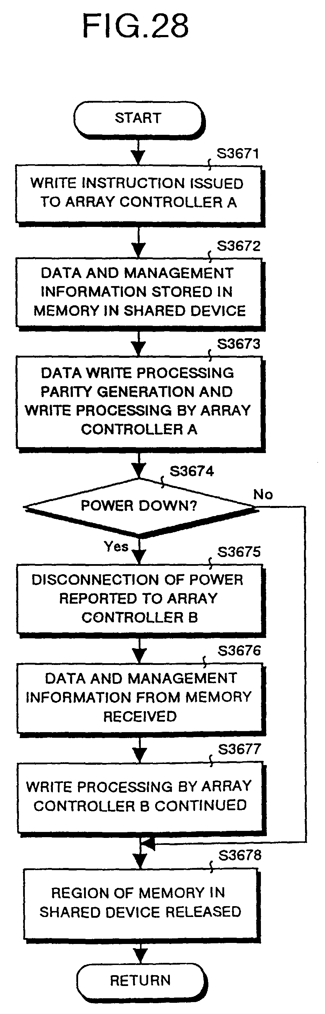

Fig. 28 is a flow chart showing details of the write processing in the disk array device in Fig. 26. In Fig. 28, when the control unit 10 receives a write command from the host computer 18, at first in step S3671, the control unit 10 issues a data write instruction to the array controller A50.

When the array controller A50 receives new data (D0 new) 40 together with the write instruction, in step S3672 the array controller A50 stores the new data (D0 new) 40-6, old data (D0 old) 40-7, old parity (Dp old) 48-6, and management table 41-1 in the nonvolatile memory 34 in the shared device 90, then in step S3673 writes the new data (D0 new) 40 in the disk device 32-1 and also generates new parity (Dp new) from the new data (D0 new) 40, old data (D0 old) 40-1, and old parity (Dp old) 48, and starts the normal write processing to write the new parity in the disk device 32-5 for storage of parity.

During the normal write processing, if power supply to the array controller currently executing the write processing, namely power supply to the array controller A50 is disconnected, in step S3674 the power monitoring section 93 detects disconnection of the power, and in step S3675 reports disconnection of the power to the array controller A50 to the other array controller, namely to the array controller B51.

In step S3676, the array controller B51 having received the report of disconnection of power reads out new data (D0 new) 40-6, old data (D0 old) 40-7, old parity (Dp old) 48-6 , and management information in the management table 41-4 from the nonvolatile memory 34 in the shared device 90, and in step S3677 the array controller B51 continues the interrupted write processing in place of the array controller A50.

Then in step S3678, after the write processing by the array controller B51 is finished, a region of the nonvolatile memory 34 in the shared device 90 is released, and the write processing is finished.

In step S3674, when disconnection of power to the array controller A50 is not detected, system control shifts to step S3678, a region of the nonvolatile in the shared memory 90 is released, and the write processing is finished.

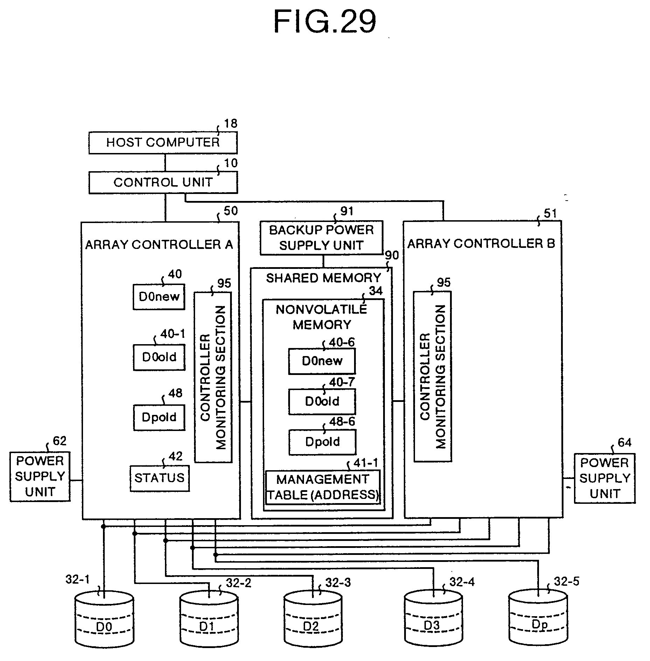

Fig. 29 shows a case where, in place of the power monitoring section 93 for monitoring disconnection of power to the array controller as shown in Fig. 26, a controller monitoring section 95 for monitoring operations of the array controllers 50, 51 is provided in each of the array controllers 50, 51, and power supply to other controller is periodically monitored by this controller monitoring section 95 at a prespecified time interval. Other portions of the configuration are the same as those in Fig. 26, and detailed description thereof is omitted herein.

The controller monitoring section 95, for instance, periodically sends a message to the other array controller, and motors a response to the message.

Next description is made for a flow of operations in the disk array device shown in Fig. 29. A general operation flow, a flow of operations in the data read processing, and a flow of operations in the recovery processing are the same as those in the device shown in Fig. 26, namely are substantially the same as those shown in the flow charts in Fig. 6, Fig. 13, and Fig. 12 respectively. For this reason, description of the general operation flow and flows of operations in the recovery processing and in the data read processing is omitted herein.

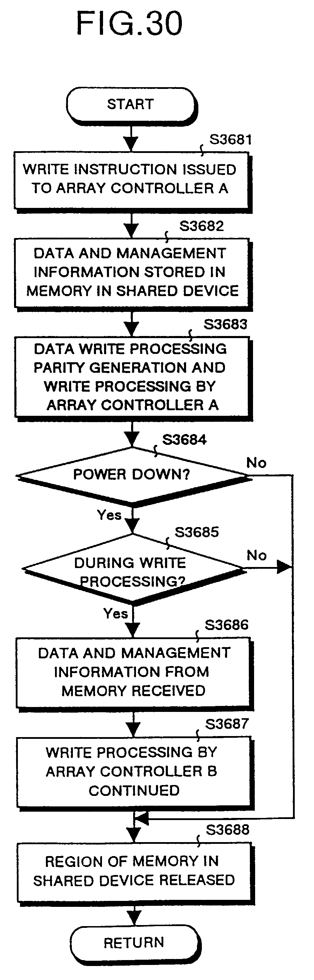

Fig. 30 is a flow chart showing details of the write processing in the disk array device shown in Fig. 29. In Fig. 30, when the control unit 10 receives a write command from the host computer 18, at first in step S3681 the control unit 10 issues a data write instruction to the array controller A50.

When the array controller A50 receives new data (D0 new) 40 together with the write instruction, in step S3682 the array controller A50 stores the new data (D0 new) 40-6, old data (D0 old) 40-7, old parity (Dp old) 48-6, and management table 41-1 in the nonvolatile memory 34 in the shared device 90, and then in step S3683 writes the new data (D0 new) 40 in the disk device 32-1, and also generates new parity (Dp new) from the new data (D0 new) 40, old data (D0 old) 40-1, old parity (Dp old) 48, and starts the normal write operation to write the new parity (Dp new) in the disk device 32-5 for parity.

During this ordinary write processing, if power supply to the array controller executing the write operation, namely power to the array controller A50 is disconnected, in step S3684 the controller monitoring section 95 in the array controller B51 monitoring operating state of the array controller A50 at a prespecified interval detects disconnection of the power. Then in step S3685, the array controller B51 determines, by referring to the status of write processing stored in the nonvolatile memory 34 in the shared device 90, whether the array controller A50 was executing the write processing or not at the point of time when power to the array controller A50 was cut.

If it is determined that the array controller was executing the write processing when the power supply was disconnected, in step S3686 the array controller B51 reads out the new data (D0 new) 40-6, old data (D0 old) 40-7, old parity (Dp old) 48-6, and management information in the management table 41-1 from the nonvolatile memory 34 in the shared device 90, and in step 3687 restarts the interrupted write processing in place of the array controller A50.

Then in step S3688, after the write processing by the array controller B51 is finished, a region of the nonvolatile memory 34 in the shared device 90 is released, and the write processing is finished.

In step S3684, if disconnection of power supply to the array controller A50 is not detected, or if it is determined in step S3685 that the array controller A50 was not executing the write processing when power was cut, system control shifts to step S3688, a region of the nonvolatile memory 34 in the shared device 90 is released, and the write processing is finished.

With Embodiment 5 shown in Fig. 26 to Fig. 30, the nonvolatile memory 34 is provided in the shared device 90 accessible from both the array controller A50 and array controller B51, and when the data write processing is started, the new data (D0 new) 40-6, old data (D0 old) 40-7, old parity (Dp old) 48-6, and management table 41-1 including status or the like therein are stored in the nonvolatile memory 34, so that, when any abnormality is generated in the write processing by one of the array controllers, the other array controller can continue the write processing in place f the faulty array controller, and for this reason consistency of data can be maintained.

With Embodiment 5 above, even if write processing is not finished in the normal state due to power failure to the entire system or for some other reason during the processing for writing data and parity, when power supply is restarted, the data can easily be recovered by using the data and management information stored in the nonvolatile memory 34 in the shared device 90.

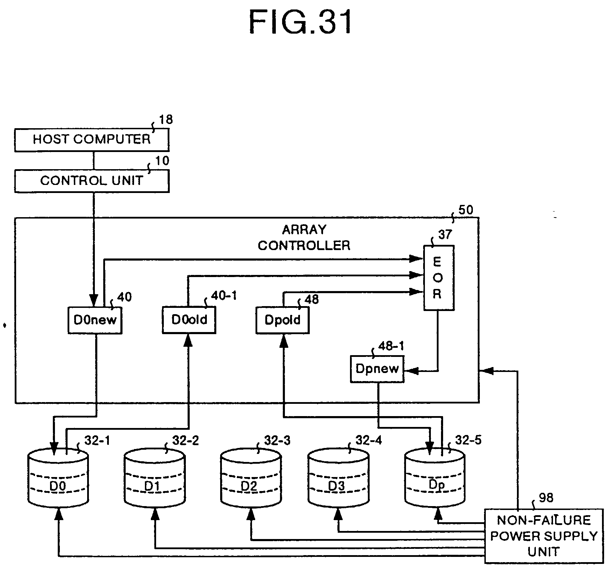

Fig. 31 is a functional block diagram showing the disk array device according to Embodiment 6 of the present invention. In this disk array device according to this embodiment, as shown in Fig. 31, connected to the control unit 10 with the host computer 18 connected thereto is an array controller 50, and for instance 5 units of disk devices 32-1, 32-2, 32-3, 32-4, 32-5 are controlled by the array controller 50. Power is supplied from a non-failure power supply unit 98 to the array controller 50 as well as to all the disk devices 32-1 to 32-5. It should be noted that the same reference numerals are assigned to the same components as those in the disk array device shown in Fig. 2, and detailed description is omitted herein.

Generally, inconsistency in data stored the disk devices 32-1 to 32-5 is generated when write processing is interrupted due to stop of power supply to the disk devices 32-1 to 32-5 or to the array controller 50 during the write processing to the disk devices.

The non-failure power supply unit 98 incorporates a battery therein, and in a case where, for instance, supply of AC power is stopped due to power failure or for some other reason, power to the disk devices 32-1 to 32-5 or to the array controller 50 is backed up by the battery until the write processing being executed by the array controller 50 at the point of time when the AC power supply was stopped is finished.

With Embodiment 6 shown in Fig. 31, power for the array controller 50 is backed up by the non-failure power supply unit 98, so that power supply can continuously be executed even when AC input to the power supply unit is stopped or when power supply from the power supply unit to the array controller 50 is stopped due to any trouble, the write processing by the array controller 50 is not interrupted, and generation of inconsistency in data can be prevented.

Also with Embodiment 6 above, power supply to the disk devices 32-1 to 32-5 is backed up by the non-failure power supply unit 98, so that power supply can be continued even when power supply from a power supply unit to the disk devices 32-1 to 32-5 is stopped due to any trouble, the write processing by the array controller 50 is not interrupted, and generation of inconsistency in data can be prevented.

It should be noted that the present invention is not limited to the embodiments described above, and it is needless to say that various modifications and changes in the design are possible within the gist of the invention.

Description of the embodiments above assumes a case of recovery processing executed, after power supply is disconnected during write processing, when power supply is restarted, but the present invention can be applied, in addition to a case where some trouble is generated due to disconnection of power, to the recovery processing where write processing is not finished in the normal state due to generation of some other fatal troubles during write processing.

With the present invention, when write processing once interrupted due to power failure or for some other reason is restarted, processing for data recovery is executed by generating new parity using data and parity stored at positions corresponding to disk write positions for new data in a disk device in which new data is to be written as well as in a disk device for parity and also new data stored in a nonvolatile memory, data can easily be executed even when there is any faulty disk device. Namely in the conventional technology, if there is any faulty disk device, when it is tried to execute processing for data recovery because there is no consistency in parity at the restarting of write processing once interrupted, in the conventional technology, the parity cannot be reproduced because data required for recovery cannot be normally read out from the faulty disk device, namely processing for data recovery cannot be executed, but with the present invention, it is possible to overcome the inconvenience.

This application is based on Japanese patent application No. HEI 9-302331 filed in the Japanese Patent Office on November 4, 1997, the entire contents of which are hereby incorporated by reference.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

**Claims**

1. A disk array device adapted to data updating by reading out old data stored at a write position of a specified disk device, then writing new data transferred from a upper device at said write position, and writing a new parity generated according to an old parity stored at a disk write position for said new data on a disk device for parity, said old data as well as to said new data at a disk storage position for said old parity, comprising;

   an nonvolatile memory for storing therein new data transferred from a upper device; and

a special write executing unit for executing processing for recovery, in a case where, when write processing is interrupted once and then said interrupted write processing is restarted, it is impossible to restore a parity because required data can not normally be read out from a third disk device other than a first disk device in which said new data is stored in said nonvolatile memory thereof and also in which new data is to be written and a second disk for parity, by generating a new parity by means of using data and parity stored at a position corresponding to a disk write position for said new data on said first disk device and said second disk device and new data stored in said nonvolatile memory.

2. A disk array device according to claim 1; wherein a write flag indicating that write processing is being executed and management information indicating progression of the write processing are stored in said nonvolatile memory in a period of time from a time when a write processing instruction is received from an upper device until the write operation is finished in the normal state.

3. A disk array device according to claim 1; wherein said data stored at positions corresponding to disk write positions for said new data on all disk devices other than said first disk device, second disk device, and third disk device, and said generated new parity are stored in said nonvolatile memory, and

said special write executing unit concurrently writes said new data stored in said nonvolatile memory, said data stored at corresponding positions of all disk devices excluding said first disk device, second disk device, and third disk device, and said generated new parity in corresponding disks.

4. A disk array device according to claim 3; wherein a write flag indicating that write processing is being executed and management information indicating progression of the write processing are stored in said nonvolatile memory in a period of time from a time when a write processing instruction is received from an upper device until the write operation is finished in the normal state.

5. A disk array device comprising a plurality of array controllers each driven by an independent power supply unit for writing and reading data and parity to and from a plurality of disk device, and a control unit for controlling said array controller, and executing data updating by reading out old data stored at a write position on a specified disk device, then writing new data transferred from an upper device at said write position, and further writing a new parity generated according to an old parity, said old data, and said new data read from storage positions corresponding to disk write positions for said new data in a disk device for parity at disk storage positions for said old parity; wherein said control unit comprises;

an nonvolatile memory for storing therein at least said new data, old data, and old parity, when write processing is instructed from an upper device, before the write processing is executed to a disk device;
a task generating unit for generating, when it is reported that an array controller, to which power supply has been stopped, is included in said plurality of array controllers, a task for allocating the write processing being executed by the array controller with power supply having been stopped thereto or write processing to be executed by said array controller but not having been completed to other array controllers; and
a task information table for storing therein the task generated by said task generating unit;
and further said plurality of array controllers each comprise;
a power monitoring unit for mutually monitoring the power supply state;
a power supply stop reporting unit for reporting to said control unit the fact that stoppage of power supply to other array controller or controllers has been detected; and
a parity generating unit for generating a new parity according to data read from a storage position corresponding to a disk write position for said new data on all disks excluding said disk device in which it has been specified to write new data and the disk device for parity as well as to new data transferred from said nonvolatile memory.

6. A disk array device according to claim 5; wherein management information indicating progression of write processing is stored in said nonvolatile memory, and said task generating unit generates a task according to said management information stored in said nonvolatile memory.

7. A disk array device comprising a plurality of array controllers each driven by an independent power supply unit for writing and reading data and parity to and from a plurality of disk device, and a control unit for controlling said array controller, and executing data updating by reading out old data stored at a write position on a specified disk device, then writing new data transferred from an upper device at said write position, and further writing a new parity generated according to an old parity, said old data, and said new data read from storage positions corresponding to disk write positions for the new data in a disk device for parity at disk storage positions for said old parity; wherein each of said plurality of array controllers comprises:

a nonvolatile memory for storing, when write processing is instructed from an upper device, and before the write processing to a disk device is executed, at least said new data, old data, and old parity therein; and

a communicating unit for executing transaction of data and parity with another array controller, transmitting, when said new data, old data, and old parity have been stored in said nonvolatile memory in one of the array controllers, said new data, old data, and old parity stored in said nonvolatile memory from said one array controller to the other array controller before write processing is executing to a disk device, and also receiving said new data, old data, and old parity sent from said one array controller to the other array controller and storing them in said nonvolatile memory of said other array controller.

8. A disk array device according to claim 7 characterized in that, when write processing is interrupted in said one of the array controllers and then said array controller interrupted as described above is restored to a stable allowing the normal operation, said one of the array controllers, or said other array controller having received said new data, old data, and old parity from said one of the array controller before interruption of the write processing executes the interrupted write processing again according to said new data, old data, and old parity stored in a respective nonvolatile memory.

9. A disk array device according to claim 7; wherein management information indicating progression of write processing is stored in said nonvolatile memory.

10. A disk array device according to claim 9 characterized in that, when write processing is interrupted in said one of the array controllers and then said array controller interrupted as described above is restored to a stable allowing the normal operation, said one of the array controllers, or said other array controller having received said new data, old data, and old parity from said one of the array controller before interruption of the write processing executes the interrupted write processing again according to said new data, old data, and old parity stored in a respective nonvolatile memory.

11. A disk array device comprising a plurality units of disk devices, and an array controller for writing and reading data and parity to and from said disk devices and adapted for data updating by reading old data stored at a write position of a specified disk device and then writing new data transferred from an upper device at said write position, and also writing a new parity generated according to an old parity, said old data, and said new data read from a storage position corresponding to a disk write position for said new data on a disk device for parity at a disk storage position for said old parity; characterized in that said disk array device further comprises a non-failure power supply unit for baking up power supply to said plurality units of disk device as well as power supply to said array controller.

12. A disk array device adapted for data updating by reading out old data stored at a write position of a specified disk device and then new data transferred from an upper device at said write position, and also writing a new parity generated according to an old parity, said old data, and said new data stored at a write position corresponding to the disk write position for said new data on a disk device for parity at the disk storage position for said old parity; said disk array device further comprising:

a special write executing unit for executing processing recovery, when, of a data group as a basis for a parity, data in at least two disk units can not be read out normally, by writing arbitrary data in said two disk devices from which data can not be read out normally and generating a new parity using said data arbitrarily written and data normally read out from said data group as a basis for a parity; and

a data error detecting unit for issuing a data check response to read to the data arbitrarily written by said special write executing unit.

# FIG.1

UPPER DEVICE ~18

DISK ARRAY DEVICE

10

CONTROL UNIT

110

SPECIAL WRITE EXECUTING UNIT

CHANNEL INTERFACE ADAPTER ~16

113

116

DATA WRITE UNIT

PARITY GENERATING UNIT

NONVOLATILE MEMORY

34

DATA REPRODUCING UNIT ~120

50

ARRAY CONTROLLER

54-1    154-2    154-3    154-4    154-5

154-1

DATA ERROR DETECTING UNIT

DEVICE INTERFACE ADAPTER

154-2

DATA ERROR DETECTING UNIT

DEVICE INTERFACE ADAPTER

154-3

DATA ERROR DETECTING UNIT

DEVICE INTERFACE ADAPTER

154-4

DATA ERROR DETECTING UNIT

DEVICE INTERFACE ADAPTER

154-5

DATA ERROR DETECTING UNIT

DEVICE INTERFACE ADAPTER

32-1   32-2   32-3   32-4   32-5

D0    D1    D2    D3    Dp

# FIG.2

# FIG.3

HOST COMPUTER ~18

CONTROL UNIT

NONVOLATILE MEMORY ~34

~10

41~ MANAGEMENT TABLE

42~ STATUS | SELF-SYSTEM FLAG ~43

WRITE FLAG ~44

40 D0new

12~

E O R (MPU)

40-1 D0old

46 D2

47 D3

48 Dpold

48-1 Dpnew

ARRAY CONTROLLER ~50

54-1 54-2 54-3 54-4 54-5

40-2 D0 new  40-3 D0 old

DEVICE INTERFACE ADAPTER

46-1 D2

47-1 D3

48-2 Dp new  48-3 Dp old

32-1 D0

32-2 (FAILURE)

32-3 D2

32-4 D3

32-5 Dp

EP 0 915 420 A2

# FIG.4

HOST COMPUTER ~18

CONTROL UNIT ~10

41~ MANAGEMENT TABLE

NONVOLATILE MEMORY ~34

42~ STATUS | SELF-SYSTEM FLAG ~43

WRITE FLAG ~44

12~ E O R (MPU)

40 D0new

22 VOLATILE MEMORY

40-1 D0old | 45 D1 | 46 D2 | 47 D3 | 48 Dpold | 48-1 Dpnew

ARRAY CONTROLLER ~50

54-1 | 40-2 D0 new | 40-3 D0 old

54-2 DEVICE INTERFACE ADAPTER | 45-1 D1

54-3 | 46-1 D2

54-4 | 47-1 D3

54-5 | 48-2 Dp new | 48-3 Dp old

32-1 D0 | 32-2 D1 | 32-3 D2 | 32-4 D3 | 32-5 Dp

EP 0 915 420 A2

# FIG.5

| op-id | STATUS | SELF-SYSTEM/ ANOTHER SYSTEM | ADDRESS |
|---|---|---|---|
| 15 | DATA-READ | SELF-SYSTEM | ✕✕✕✕✕✕✕✕ |
| 30 | PARITY-WRITTEN | SELF-SYSTEM | △△△△△△△△ |

# FIG.6

```
          ┌─────────────┐
          │    START    │
          └──────┬──────┘
                 │         S1
          ┌──────▼──────┐
          │  INITIALIZE │
          └──────┬──────┘
                 │         S2
                 ▼              Yes              S8
          ◇ POWER DOWN? ◇─────────────►┌──────────────┐
                 │                      │  RECOVERING  │
                 │ No                   │  PROCESSING  │
                 │                      └──────┬───────┘
                 ▼◄─────────────────────────────
                 │         S3
       No   ◇ COMMAND       ◇
    ◄────────◇ RECEIVED FROM HOST ◇
             ◇ COMPUTER?     ◇
                 │
                 │ Yes
                 ▼         S4
          ┌─────────────┐
          │   COMMAND   │
          │   DECODED   │
          └──────┬──────┘
                 │         S5
                 ▼              READ
          ◇ READ/WRITE? ◇──────────────────┐
                 │                          │
            WRITE│                          │
                 ▼         S6               ▼        S7
          ┌─────────────┐          ┌──────────────┐
          │DATA WRITE AND│          │  DATA READ   │
          │PARITY UPDATING│         │  PROCESSING  │
          │  PROCESSING  │          └──────────────┘
          └─────────────┘
```

# FIG.7

```
                    START

                         S61
              WRITE FLAG「1」

                         S62
                  FT/NFT          FT

         NFT         S63                      S67
     SPECIAL DATA              NORMAL DATA WRITE
   WRITE PROCESSING               PROCESSING

                         S64
    NORMAL TERMINATION
          REPORT

                         S65
       WRITE FLAG「0」

                         S66
     CONFIRMATION OF
   NORMAL TERMINATION

                   RETURN
```

# FIG.8

START

S631
NEW DATA FROM HOST COMPUTER
STORED IN MEMORY

S632
DATA READ OUT FROM ALL DEVICES
EXCLUDING FAULTY ONE

S633
READ-OUT DATA STORED
IN MEMORY

S634
NEW PARITY GENERATED FROM OLD
PARITY, OLD DATA, AND NEW DATA

S635
NEW PARITY STORED IN MEMORY

S636
NEW DATA, NEW PARITY, OTHER DATA
TRANSFERRED TO AND STORED IN
DEVICE INTERFACE ADAPTOR

S637
NEW DATA, NEW PARITY, AND OTHER
DATA TRANSFERRED TO DISK DEVICE

S638
NEW DATA, NEW PARITY, OTHER DATA
WRITTEN IN DISK DEVICE

RETURN

# FIG.9

START

S671
NEW DATA FROM HOST
STORED IN MEMORY

S672
NEW DATA TRANSFERRED TO AND
STORED IN DEVICE INTERFACE ADAPTOR

S673
OLD DATA READ OUT FROM DISK DEVICE

S674
OLD DATA STORED IN DEVICE
INTERFACE ADAPTOR

S675
NEW DATA IN DEVICE INTERFACE
ADAPTER TRANSFERRED TO DISK DEVICE

S676
NEW DATA WRITTEN IN DISK DEVICE

S677
OLD PARITY READ OUT
FROM DISK DEVICE

S678
OLD PARITY STORED IN DEVICE
INTERFACE ADAPTER

S679
NEW PARITY GENERATED FROM OLD
PARITY, OLD DATA, AND NEW DATA, AND
STORED

S680
NEW PARITY TRANSFERRED TO AND
STORED IN DEVICE INTERFACE ADAPTER

S681
NEW PARITY TRANSFERRED
TO DISK DEVICE

S682
NEW PARITY WRITTEN IN DISK DEVICE

RETURN

# FIG.10

```
           ┌──────────────┐
           │    START     │
           └──────┬───────┘
                  │  S81
                  ▼
         ◇ WRITE FLAG「1」? ◇───No──────────────┐
                  │                              │
                 Yes                             │
                  │  S82                         │
                  ▼                              │
         ◇   FT/NFT?   ◇────FT──────┐            │
                  │                  │           │
                 NFT                 │           │
                  │  S83             ▼  S86      │
          ┌──────────────┐   ┌──────────────┐   │
          │   RECOVERY   │   │   RECOVERY   │   │
          │ PROCESSING   │   │ PROCESSING   │   │
          │   IN NFT     │   │   IN FT      │   │
          └──────┬───────┘   └──────┬───────┘   │
                 │◄─────────────────┘           │
                 │  S84                          │
          ┌──────────────┐                       │
          │ INSTRUCTION  │                       │
          │  FOR SHIFT   │                       │
          │  TO NORMAL   │                       │
          │    MODE      │                       │
          └──────┬───────┘                       │
                 │  S85                           │
          ┌──────────────┐                       │
          │ SHIFT TO     │                       │
          │ NORMAL MODE  │                       │
          └──────┬───────┘                       │
                 │◄─────────────────────────────┘
                 ▼
           ┌──────────────┐
           │    RETURN    │
           └──────────────┘
```

# FIG.11

```
                    ┌──────────────┐
                    │    START     │
                    └──────┬───────┘
                           │              S831
        ┌──────────────────▼──────────────────┐
        │      INSTRUCTION FOR SHIFT           │
        │         TO SPECIAL MODE              │
        └──────────────────┬──────────────────┘
                           │              S832
        ┌──────────────────▼──────────────────┐
        │        SHIFT TO SPECIAL MODE         │
        └──────────────────┬──────────────────┘
                           │              S833
        ┌──────────────────▼──────────────────┐
        │  NEW DATA, NEW PARITY, AND OTHER     │
        │    DATA READ OUT FROM MEMORY         │
        └──────────────────┬──────────────────┘
                           │              S834
        ┌──────────────────▼──────────────────┐
        │    NEW DATA, NEW PARITY, OTHER       │
        │     DATA TRANSFERRED TO AND          │
        │    STORED IN DEVICE INTERFACE        │
        │            ADAPTOR                   │
        └──────────────────┬──────────────────┘
                           │              S835
        ┌──────────────────▼──────────────────┐
        │  NEW DATA, NEW PARITY, AND OTHER     │
        │  DATA TRANSFERRED TO DISK DEVICE     │
        └──────────────────┬──────────────────┘
                           │              S836
        ┌──────────────────▼──────────────────┐
        │    NEW DATA, NEW PARITY, OTHER       │
        │  ·  DATA WRITTEN IN DISK DEVICE      │
        └──────────────────┬──────────────────┘
                           │              S837
        ┌──────────────────▼──────────────────┐
        │     NORMAL TERMINATION REPORT        │
        └──────────────────┬──────────────────┘
                           │              S838
        ┌──────────────────▼──────────────────┐
        │         WRITE FLAG 「0」             │
        └──────────────────┬──────────────────┘
                           │              S839
        ┌──────────────────▼──────────────────┐
        │   CONFIRMATION OF NORMAL             │
        │        TERMINATION                   │
        └──────────────────┬──────────────────┘
                           │              S840
   No              ◇───────▼───────◇
  ◄────────────────   ALL WRITE FLAG 「0」 ?
                     ◇───────┬───────◇
                         Yes │
                    ┌────────▼────────┐
                    │     RETURN      │
                    └─────────────────┘
```

# FIG.12

```
        ┌─────────────┐
        │    START    │
        └──────┬──────┘
               │                    S861
        ┌──────▼──────────────┐
        │ INSTRUCTION FOR SHIFT│
        │   TO SPECIAL MODE    │
        └──────┬──────────────┘
               │                    S862
        ┌──────▼──────────────┐
        │ SHIFT TO SPECIAL MODE│
        └──────┬──────────────┘
               │                    S863
        ┌──────▼──────────────┐
        │ NEW DATA TRANSFERRED │
        │ FROM MEMORY TO DEVICE│
        │ INTERFACE ADAPTER AND│
        │       STORED         │
        └──────┬──────────────┘
               │                    S864
        ┌──────▼──────────────┐
        │ OTHER DATA READ OUT  │
        │ FROM OTHER DISK      │
        │ DEVICE AND STORED    │
        └──────┬──────────────┘
               │                    S865
        ┌──────▼──────────────┐
        │ NEW DATA WRITTEN IN  │
        │    DISK DEVICE       │
        └──────┬──────────────┘
               │                    S866
        ┌──────▼──────────────┐
        │ NEW PARITY GENERATED │
        │ FROM NEW DATA AND    │
        │ OTHER DATA AND STORED│
        └──────┬──────────────┘
               │                    S867
        ┌──────▼──────────────┐
        │  NEW PARITY WRITTEN  │
        │   IN DISK DEVICE     │
        └──────┬──────────────┘
               │                    S868
        ┌──────▼──────────────┐
        │NORMAL TERMINATION    │
        │      REPORT          │
        └──────┬──────────────┘
               │                    S869
        ┌──────▼──────────────┐
        │   WRITE FLAG 「0」    │
        └──────┬──────────────┘
               │                    S870
        ┌──────▼──────────────┐
        │CONFIRMATION OF NORMAL│
        │    TERMINATION       │
        └──────┬──────────────┘
               │                    S871
          No  ◇─▼──────────────◇
         ◄────│ ALL WRITE FLAG  │
              │   「0」 ?        │
              ◇──────┬──────────◇
                     │ Yes
              ┌──────▼──────┐
              │   RETURN    │
              └─────────────┘
```

36

# FIG.13

```
        ┌─────────────┐
        │    START    │
        └──────┬──────┘
               │
               ▼              ⌒ S71
     ┌──────────────────────┐
     │ DATA READ OUT FROM   │
     │     DISK DEVICE      │
     └──────────┬───────────┘
               │
               ▼              ⌒ S72
     ┌──────────────────────┐
     │ DATA STORED IN DEVICE│
     │  INTERFACE ADAPTER   │
     └──────────┬───────────┘
               │
               ▼              ⌒ S73
     ┌──────────────────────┐
     │ DATA TRANSFERRED TO  │
     │        HOST          │
     └──────────┬───────────┘
               │
               ▼
        ┌─────────────┐
        │   RETURN    │
        └─────────────┘
```

# FIG.14

EP 0 915 420 A2

# FIG.15

FIG.16

# FIG.17

HOST COMPUTER—18

CONTROL UNITE ~10

CHANNEL INTERFACE ADAPTER 16

VOLATILE MEMORY 22

MPU 12

ROM 20

RESOURCE MANAGER MODULE 13

CACHE FUNCTION ENGINE 24

CACHE MEMORY 26

DEVICE INTERFACE ADAPTER A 17 A

DEVICE ADAPTER MODULE A 11

DEVICE INTERFACE ADAPTER B 15 B

DEVICE ADAPTER MODULE B 19

SERVICE ADAPTER 14

NONVOLATILE MEMORY 34

BACKUP POWER SUPPLY UNIT 36

POWER SUPPLY UNIT 27

POWER SUPPLY UNIT 28

POWER SUPPLY UNIT 62

ARRAY CONTROLLER A 50

ARRAY CONTROLLER B 51

POWER SUPPLY UNIT 64

32-1

32-2

32-3

32-4

32-5

EP 0 915 420 A2

# FIG.18

HOST COMPUTER 18

CONTROL UNIT 10

NONVOLATILE MEMORY 34, 41

GROUP A

D0new 40

D0old 40-1

Dpold 48

MANAGEMENT TABLE 41

op-id STATUS CONTROLLER ADDRESS A/B WRITE FLAG

44

GROUP B

TASK INFORMATION TABLE 74

ALTERNATIVE PATH PROCESSING REQUEST FLAG 76

TASK GENERATING SECTION 72

ARRAY CONTROLLER A 50

POWER SUPPLY MONITORING SECTION 55

PARITY GENERATING SECTION 57

POWER SUPPLY STOP REPORTING SECTION 56

ARRAY CONTROLLER B 51

POWER SUPPLY MONITORING SECTION 55

PARITY GENERATING SECTION 57

POWER SUPPLY STOP REPORTING SECTION 56

32-1 D0

32-2 D1

32-3 D2

32-4 D3

32-5 Dp

# FIG.19

START

WRITE INSTRUCTION ISSUED
TO ARRAY CONTROLLER A
S1671

PROCESSING BY ARRAY CONTROLLER A
FOR WRITING DATA, GENERATING AND
WRITING PARITY
S1672

ABNORMAL TERMINATION
DETECTED?
S1673
— No

Yes

POWER DOWN?
S1674
— No

Yes

ALTERNATIVE PATH PROCESSING
REQUEST FLAG 「1」
S1675

REPORT ON REQUEST FOR ALTERNATIVE
PATH PROCESSING
S1676

WRITE PROCESSING TASK
REQUEST ISSUED
S1677

RECOGNITION OF WRITE PROCESSING
AND ALTERNATIVE DEVICE PATH
PROCESSING
S1678

WRITE INSTRUCTION WITH PARITY
GENERATION FLAG ADDED THERETO
ISSUED TO ARRAY CONTROLLER B
S1679

DATA WRITE PROCESSING
BY ARRAY CONTROLLER B
S1680

PARITY GENERATION AND WRITE
PROCESSING BY ARRAY CONTROLLER B
S1681

ALTERNATIVE PATH PROCESSING
REQUEST FLAG 「0」
S1682

RETURN

ABNORMAL
OPERATION /
INTERRUPT
S1683
— INTERRUPT

ABNORMAL
OPERATION

RESET PROCESSING
S1684

WRITE INSTRUCTION WITH
PARITY GENERATION FLAG
ADDED THERETO ISSUED
TO ARRAY CONTROLLER A
S1685

DATA WRITE PROCESSING
BY ARRAY CONTROLLER A
S1686

PARITY GENERATION AND
WRITE PROCESSING BY
ARRAY CONTROLLER A
S1687

43

# FIG.20

```
            ┌─────────┐
            │  START  │
            └────┬────┘
                 │            S1691
          ╱──────┴──────╲
        ╱   NORMAL        ╲      No
       ╱ TERMINATION COMPLETE SIGNAL ╲─────────────┐
       ╲   NOT RECEIVED YET?         ╱              │
        ╲───────┬───────╱                           │
              Yes │         S1692                    │
         ┌────────┴────────────┐                    │
         │ DETECTION OF TIME OUT │                   │
         └────────┬─────────────┘                   │
                  │           S1693                  │
         ┌────────┴────────────┐                    │
         │ ALTERNATIVE PATH PROCESSING │            │
         │   REQUEST FLAG 「1」        │             │
         └────────┬─────────────┘                   │
                  │           S1694                  │
         ┌────────┴────────────┐                    │
         │ WRITE PROCESSING TASK │                   │
         │   REQUEST ISSUED     │                    │
         └────────┬─────────────┘                   │
                  │           S1695                  │
         ┌────────┴────────────┐                    │
         │ RECOGNITION OF WRITE PROCESSING │        │
         │   AND ALTERNATIVE DEVICE        │        │
         │        PATH PROCESSING          │        │
         └────────┬─────────────┘                   │
                  │           S1696                  │
         ┌────────┴────────────┐                    │
         │ WRITE INSTRUCTION WITH PARITY   │        │
         │ GENERATION FLAG ADDED THERETO   │        │
         │ ISSUED TO ARRAY CONTROLLER B    │        │
         └────────┬─────────────┘                   │
                  │           S1697                  │
         ┌────────┴────────────┐                    │
         │ DATA WRITE PROCESSING │                   │
         │ BY ARRAY CONTROLLER B │                   │
         └────────┬─────────────┘                   │
                  │           S1698                  │
         ┌────────┴────────────┐                    │
         │ PARITY GENERATION AND WRITE     │        │
         │ PROCESSING BY ARRAY CONTROLLER B │       │
         └────────┬─────────────┘                   │
                  │           S1699                  │
         ┌────────┴────────────┐                    │
         │ ALTERNATIVE PATH PROCESSING │            │
         │   REQUEST FLAG 「0」        │             │
         └────────┬─────────────┘                   │
                  │◄──────────────────────────────────┘
            ┌─────┴────┐
            │  RETURN  │
            └──────────┘
```

# FIG.21

# FIG.22

```
                                      34
  ┌─────────────────────────────────┐
  │         NONVOLATILE             │
  │          MEMORY          41     │
  │   ┌─────────────────────────┐   │
  │   │    MANAGEMENT TABLE     │   │
  │   ├──────────┬──────────────┤   │
  │   │  STATUS  │ SELF-SYSTEM  │   │
  │   │          │    FLAG      │   │
  │   └──────────┴──────────────┘   │
  │        42         43            │
  │                                 │
  │                  40             │
  │          ┌──────────┐           │
  │          │  D0new   │           │
  │          └──────────┘           │
  │                                 │
  │                 48-1            │
  │          ┌──────────┐           │
  │          │  Dpnew   │           │
  │          └──────────┘           │
  │                                 │
  └─────────────────────────────────┘
```

# FIG.23

```
                                      34
  ┌─────────────────────────────────┐
  │         NONVOLATILE             │
  │          MEMORY          41     │
  │   ┌─────────────────────────┐   │
  │   │    MANAGEMENT TABLE     │   │
  │   ├──────────┬──────────────┤   │
  │   │  STATUS  │ SELF-SYSTEM  │   │
  │   │          │    FLAG      │   │
  │   └──────────┴──────────────┘   │
  │        42         43            │
  │                                 │
  │                  40             │
  │          ┌──────────┐           │
  │          │  D0new   │           │
  │          └──────────┘           │
  │                                 │
  │                 48-5            │
  │     ┌────────────────────┐      │
  │     │       Dpint        │      │
  │     │ ( D0old (+) Dpold ) │     │
  │     └────────────────────┘      │
  │                                 │
  └─────────────────────────────────┘
```

# FIG.24

STATUS

```
           START
              │
              ▼  S2671
┌──────────────────────────┐
│   WRITE INSTRUCTION AND   │      ( Receive new data )
│     NEW DATA RECEIVED     │
└──────────────────────────┘
              │
              ▼  S2672
┌──────────────────────────┐
│    NEW DATA COPIED INTO   │      ( Receive new data )
│    ARRAY CONTROLLER B     │
└──────────────────────────┘
              │
              ▼  S2673
┌──────────────────────────┐
│  OLD DATA AND OLD PARITY  │      ( Read old data & parity )
│         READ OUT          │
└──────────────────────────┘
              │
              ▼  S2674
┌──────────────────────────┐
│ OLD DATA AND OLD PARITY COPIED │  ( Read old data & parity )
│   INTO ARRAY CONTROLLER B │
└──────────────────────────┘
              │
              ▼  S2675
┌──────────────────────────┐
│ NEW PARITY GENERATED FROM OLD │   ( Generate new parity )
│ DATA, OLD PARITY, AND NEW DATA │
└──────────────────────────┘
              │
              ▼  S2676
┌──────────────────────────┐
│ NEW DATA AND NEW PARITY WRITTEN │  ( Write new data & parity )
└──────────────────────────┘
              │
              ▼  S2677                           (AFTER REPORT)
┌──────────────────────────┐
│   NORMAL TERMINATION      │  ( Write new data & parity )  →  ( Finish )
│ REPORTED TO CONTROL UNIT  │
└──────────────────────────┘
              │
              ▼  S2678
┌──────────────────────────┐
│ NORMAL TERMINATION REPORTED TO │   ( Finish )
│    ARRAY CONTROLLER B     │
└──────────────────────────┘
              │
              ▼  S2679
┌──────────────────────────┐
│   REGION OF NONVOLATILE   │      ( Finish )
│    MEMORY RELEASED        │
└──────────────────────────┘
              │
              ▼  S2680
┌──────────────────────────┐
│ REGION OF NONVOLATILE MEMORY IN │
│ ARRAY CONTROLLER B RELEASED │    ( Finish )
└──────────────────────────┘
              │
              ▼
           RETURN
```

# FIG.25

```
                    ┌──────────┐
                    │   START  │
                    └─────┬────┘
                          │ S2861
              ╱───────────┴───────────╲
             ╱   ARRAY CONTROLLER       ╲        No
            ╱  IN OTHER SYSTEM OPERATING  ╲───────────┐
            ╲       NORMALLY?             ╱           │
             ╲─────────────┬─────────────╱            │
                       Yes │                          │
                           │ S2862                    │
       Yes    ╱────────────┴────────────╲             │
      ┌──────╱   WRITE PROCESSING IN      ╲           │
      │      ╲     SELF-SYSTEM OVER?      ╱           │
      │       ╲───────────┬─────────────╱            │
      │                No │                          │
      │                   │ S2963                    │
      │         ┌─────────┴─────────┐                │
      │         │    ARBITRATION    │                │
      │         └─────────┬─────────┘                │
      │                   │◄─────────────────────────┘
      │                   │ S2864
      │         ┌─────────┴─────────┐
      │         │  NEW DATA AND STATUS │
      │         │  READ OUT FROM MEMORY│
      │         └─────────┬─────────┘
      │                   │ S2865
      │         ┌─────────┴─────────┐
      │         │ WRITE PROCESSING   │
      │         │    RESTARTED       │
      │         └─────────┬─────────┘
      └───────────────────┤
                          │ S2866
                ┌─────────┴─────────┐
                │ NORMAL TERMINATION │
                │ REPORTED TO CONTROL UNIT │
                └─────────┬─────────┘
                          │ S2867
                ┌─────────┴─────────┐
                │ NORMAL TERMINATION REPORTED │
                │ TO ANOTHER ARRAY CONTROLLER │
                └─────────┬─────────┘
                          │ S2868
                ┌─────────┴─────────┐
                │ REGION OF NONVOLATILE MEMORY │
                │        RELEASED    │
                └─────────┬─────────┘
                          │ S2869
                ┌─────────┴─────────┐
                │ REGION OF NONVOLATILE MEMORY │
                │ IN OTHER ARRAY CONTROLLER │
                │        RELEASED    │
                └─────────┬─────────┘
                          │
                    ┌─────┴────┐
                    │  RETURN  │
                    └──────────┘
```

48

# FIG.26

HOST COMPUTER ⌐18

CONTROL UNIT ⌐10

ARRAY CONTROLLER A ⌐50

POWER SUPPLY MONITORING SECTION ⌐93

D0new ⌐40

D0old ⌐40-1

Dpold ⌐48

STATUS ⌐42

POWER SUPPLY UNIT ⌐62

BACKUP POWER SUPPLY UNIT ⌐91

SHARED DEVICE ⌐90

NONVOLATILE MEMORY ⌐34

D0new ⌐40-6

D0old ⌐40-7

Dpold ⌐48-6

MANAGEMENT TABLE (ADDRESS) ⌐41-1

ARRAY CONTROLLER B ⌐51

POWER SUPPLY MONITORING SECTION ⌐93

POWER SUPPLY UNIT ⌐64

32-1 D0

32-2 D1

32-3 D2

32-4 D3

32-5 Dp

# FIG.27

```
op_id
data LBA
old data address
new data address
old parity address
new parity address
array controller #
write status
```

# FIG.28

START

S3671

WRITE INSTRUCTION ISSUED
TO ARRAY CONTROLLER A

S3672

DATA AND MANAGEMENT
INFORMATION STORED IN
MEMORY IN SHARED DEVICE

S3673

DATA WRITE PROCESSING
PARITY GENERATION AND
WRITE PROCESSING BY ARRAY
CONTROLLER A

S3674

POWER DOWN? — No

Yes

S3675

DISCONNECTION OF POWER
REPORTED TO ARRAY
CONTROLLER B

S3676

DATA AND MANAGEMENT
INFORMATION FROM MEMORY
RECEIVED

S3677

WRITE PROCESSING BY ARRAY
CONTROLLER B CONTINUED

S3678

REGION OF MEMORY IN
SHARED DEVICE RELEASED

RETURN

# FIG.29

HOST COMPUTER 18

CONTROL UNIT 10

ARRAY CONTROLLER A 50

BACKUP POWER SUPPLY UNIT 91

ARRAY CONTROLLER B 51

D0new 40

CONTROLLER MONITORING SECTION 95

SHARED MEMORY 90

NONVOLATILE MEMORY 34

D0new 40-6

CONTROLLER MONITORING SECTION 95

D0old 40-1

D0old 40-7

Dpold 48

Dpold 48-6

POWER SUPPLY UNIT 62

STATUS 42

MANAGEMENT TABLE (ADDRESS) 41-1

POWER SUPPLY UNIT 64

D0 32-1

D1 32-2

D2 32-3

D3 32-4

Dp 32-5

# FIG.30

START

S3681
WRITE INSTRUCTION ISSUED
TO ARRAY CONTROLLER A

S3682
DATA AND MANAGEMENT
INFORMATION STORED IN
MEMORY IN SHARED DEVICE

S3683
DATA WRITE PROCESSING
PARITY GENERATION AND
WRITE PROCESSING BY
ARRAY CONTROLLER A

S3684
POWER DOWN? —No

Yes

S3685
DURING WRITE
PROCESSING? —No

Yes

S3686
DATA AND MANAGEMENT
INFORMATION FROM
MEMORY RECEIVED

S3687
WRITE PROCESSING BY
ARRAY CONTROLLER B
CONTINUED

S3688
REGION OF MEMORY IN
SHARED DEVICE RELEASED

RETURN

# FIG.31

# FIG.32

HOST COMPUTER 18

DISK ARRAY CONTROL UNIT 10

32-1
DATA A
DADA B
DATA C

32-2
DATA D
DATA E
DATA F

32-3
DATA G
DATA H
DATA I

# FIG.33

HOST COMPUTER 18

DISK ARRAY CONTROL UNIT 10

32-1
DATA A
DATA B
DATA V

32-2
DATA A'
DATA B'
DATA C'

# FIG.34

# FIG.35

# FIG.36

# FIG.37

# FIG.38

HOST COMPUTER 18

CONTROL UNIT 10

ARRAY CONTROLLER 50

D0new 40

D0old 40-1

EOR 37

Dpnew 48-1

Dpold 48

32-1    32-2    32-3    32-4    32-5

D0    D1    D2    D3    Dp

DEVICE 0    1    2    3    4
(DISK DEVICE)

# FIG.39

UPPER DEVICE 18

DISK ARRAY CONTROL UNIT 34

VOLATILE MEMORY

INTERMEDIATE PARITY

NEW PARITY

NONVOLATILE MEMORY

PROCESSING STATE DATA 38

NEW DATA 40

WRITING UNIT 60

PARITY UPDATING UNIT 70

RESTORING UNIT 80

DEVICE ADAPTER

OLD DATA

NEW DATA

DEVICE ADAPTER

OLD PARITY

NEW PARITY

...

DEVICE ADAPTER

DISK (DATA)

DISK (PARITY)

...

DISK (ANOTHER DATA)